# EUROPEAN PATENT SPECIFICATION

(11) **EP 2 151 483 B1**
(45) Date of publication and mention of the grant of the patent: **01.04.2015**
(21) Application number: 09010058.7
(22) Date of filing: 04.08.2009
(51) Int. Cl.: C09D 11/10

(54) **Ink jet ink, ink jet recording method, ink cartridge, recording unit, and ink jet recording apparatus**
Tintenstrahltinte, Tintenstrahlaufzeichnungsverfahren, Tintenpatrone, Aufzeichnungseinheit und Tintenstrahlaufzeichnungsvorrichtung
Encre à jet d'encre, procédé d'enregistrement par jet d'encre, cartouche d'encre, unité d'enregistrement et appareil d'enregistrement par jet d'encre

(30) Priority: 08.08.2008 JP 2008205107
(43) Date of publication of application: 10.02.2010
(60) Divisional application: 14004322.5
(73) Proprietor: Canon Kabushiki Kaisha, Tokyo (JP)
(72) Inventor: Mukae, Fumihiko, Ohta-ku Tokyo (JP); Shirota, Katsuhiro, Ohta-ku Tokyo (JP); Yamashita, Yoshihisa, Ohta-ku Tokyo (JP); Tsujimura, Masashi, Ohta-ku Tokyo (JP); Suzuki, Katsuhiko, Ohta-ku Tokyo (JP); Kishi, Hiromitsu, Ohta-ku Tokyo (JP); Saito, Takashi, Ohta-ku Tokyo (JP); Ichinose, Hirofumi, Ohta-ku Tokyo (JP); Nagashima, Sayoko, Ohta-ku Tokyo (JP)
(74) Representative: WESER & Kollegen

(56) References cited:
- WO-A-2005/102675
- DE-A1-102005 002 716
- US-A1- 2002 077 383
- US-A1- 2003 212 198
- US-A1- 2008 187 726
- US-B1- 6 627 696

## Description

### BACKGROUND OF THE INVENTION

### Field of the Invention

The present invention relates to an ink jet ink containing a pigment as a coloring material, an ink jet recording method, an ink cartridge, a recording unit, and an ink jet recording apparatus.

### Description of the Related Art

In recent years, for ink jet inks, a pigment ink containing a pigment as a coloring material has been widely applied not only to a small printer for use in office and home applications but also to a wide format printer for use in applications where posters and advertisements are printed. In printing with the wide format printer, a considerably large recording medium such as A0- or A1-size paper is often used. In addition, in general, once an image is recorded on the recording medium, the recording medium is carried while being rolled so as to be of a cylindrical shape, so such a problem as described below arises in some cases.

That is, in the case where the image is scratched with a sharp portion such as a corner of the recording medium in rolling the recording medium, the following problem arises at considerable frequencies: the image recorded with the pigment ink is damaged, and the coloring material is shaved off. In addition, even in the case where, in putting up a recording medium on which the image has been recorded with the pigment ink as an outdoor poster, the image is strongly scratched with a sharp substance such as a nail, the problem, i.e., the shaving-off of the coloring material arises at considerable frequencies. As described above, when a pigment ink is selected as an ink for use in a wide format printer, the realization of such a much higher level of scratch resistance than a conventional one that even when a sharp substance contacts an image, the coloring material of the image is not shaved off is of great concern.

In relation to the foregoing, the scratch resistance of an image recorded with a pigment ink has been heretofore of concern, so various methods have been proposed for solving the problem. In many of the proposals, however, investigations have been conducted on a pigment ink for a small printer for an office or home use, so mere employment of conventional technologies barely result in obtaining such scratch resistance that an image is not damaged when touched with a finger. In other words, it has been still unable to solve such scratch resistance problem as described above arising when a sharp substance comes into contact with an image.

Of course, with a view to enabling one to provide an image capable of satisfying sufficient scratch resistance even in such a circumstance where a sharp substance contacts the image, several proposals have been made on a method of obtaining a higher level of scratch resistance of an image. For example, the following procedure has been proposed (see Japanese Patent Application Laid-Open No. 2000-108495 and Japanese Patent Application Laid-Open No. 2004-284362): a specific compound is applied onto an image recorded with an ink jet ink so that the smoothness and scratch resistance of the image may be improved. In addition, a proposal concerning the incorporation of a silicone-based polymer, which is said to improve the scratch resistance of an image, into ink has also been made (see Japanese Patent Application Laid-Open No. H09-188732).

On the other hand, when an image is recorded onto a recording medium with a pigment ink, large amounts of a pigment and a resin used as a dispersant are present on the surface of the recording medium, so the following problem arises as well as the above-mentioned problem concerning the scratch resistance of the image: the glossiness of the image is apt to reduce. For example, the ink-receiving layer of a swelling type recording medium, which is a recording medium frequently used in an ink jet recording method, has no pores, and the ink-receiving layer of a void type recording medium, which is also a recording medium frequently used in the ink jet recording method, has pores, but the average particle diameter of the pigment is larger than the diameter of each of the pores. Therefore, a majority of the pigment cannot permeate into the ink-receiving layer of any such recording medium, and is hence present while being exposed on the surface of the recording medium. As a result, an image portion recorded with the pigment ink of the recording medium is brought into a state where a new surface is formed by the exposed pigment. Further, after a pigment ink containing a resin as a dispersant has been applied to such recording medium, an increase in resin concentration of the ink due to the evaporation of water or the like advances the aggregation of the molecules of the resin, with the result that a larger amount of the resin remains on the surface of the recording medium. In a certain state where a pigment or resin is present while being exposed on the surface of a recording medium as described above, the surface of an image on the recording medium shows reduced smoothness, and hence, the glossiness of the image reduces. In addition, a reduction in smoothness of the surface of the image causes a difference in smoothness between the surface of the image and the surface of the recording medium where no image is recorded. In addition, such a difference in smoothness is recognized as a difference in glossiness between the recorded portion and non-recorded portion of the recording medium, causing such a problem that the gloss uniformity of the entire recording medium reduces, and one who observes the image feels a sense of abnormality.

With a view to solving the problem, i.e., the reduction in image glossiness, the following procedure has been proposed (see Japanese Patent Application Laid-Open No. H09-176543 and Japanese Patent Application Laid-Open No. H11-181342): the glossiness of an image is improved by using a particulate pigment in ink to eliminate the optical particle property of the pigment. In addition, an improvement in smoothness of an image by the incorporation of a resin emulsion into a pigment ink (see Japanese Patent Application Laid-Open No. H09-208870) and the prevention of the exposure of a pigment in ink by the inclusion of the pigment in a water-insoluble vinyl polymer (see Japanese Patent Application Laid-Open No. 2006-282760) have been proposed.

US 6,627,696 and US 2003/0212198 disclose a dispersion composition comprising a silicone graft polymer useable as an oil-based ink jet ink.
US 2002/0077383 discloses an ink for ink jet printer wherein the ink comprises a silicone graft polymer.

### SUMMARY OF THE INVENTION

However, investigations conducted by the inventors of the present invention have found that when an image is recorded with an ink jet ink, the employment of any one of the conventional techniques described above does not enable the recorded image to satisfy the above-mentioned markedly high levels of scratch resistance and glossiness targeted by the present invention. That is, with regard to image scratch resistance, each of the conventional techniques described above can provide an image capable of satisfying scratch resistance at such a level that the image is not damaged when lightly touched with a nail, but none of them can realize a higher level of image scratch resistance than the foregoing. To be specific, there is caused such a phenomenon that when an image is scratched with a sharp substance such as a nail under such a strong pressure that the non-recorded portion of a recording medium is damaged, a coloring material is shaved off.

The investigations conducted by the inventors of the present invention have found that when an ink containing a lubricating substance or smoothing compound is used, or an aqueous solution containing the lubricating substance or smoothing compound is applied onto an image as described in Japanese Patent Application Laid-Open No. 2000-108495 or Japanese Patent Application Laid-Open No. 2004-284362, the lubricating substance or the smoothing compound permeates into a recording medium together with an aqueous medium, with the result that the application of such liquids to the image hardly exerts an improving effect on the scratch resistance of the image. That is, the scratch resistance targeted by the present invention cannot be satisfied merely by using an ink containing a substance that improves the scratch resistance or applying an aqueous solution containing such a substance to the image as described in each of Japanese Patent Application Laid-Open No. 2000-108495 and Japanese Patent Application Laid-Open No. 2004-284362. In addition, Japanese Patent Application Laid-Open No. H09-188732 describes an ink containing a silicone-based polymer, but has no description about an improvement in scratch resistance of an image with the ink.

With regard to the glossiness of an image, when an image is recorded on a glossy recording medium with a pigment ink containing a particulate pigment described in Japanese Patent Application Laid-Open No. H09-176543 or Japanese Patent Application Laid-Open No. H11-181342, the image shows glossiness somewhat higher than that of an image recorded with an ink containing a pigment having a general particle diameter. However, the glossiness of the image recorded with the pigment ink containing a particulate pigment is still inferior to that of an image recorded with a dye ink containing a dye, so none of these documents reaches such a level that a clear image excellent in glossiness can be obtained. In addition, with regard to the scratch resistance of the image recorded with such pigment inks, the transfer of a color is suppressed to some extent, but the pigment is still exposed while being deposited on the surface of the recording medium, so there arises such problem that scratching the image with a finger or the like results in the shaving-off of the coloring material or the staining of the image or the non-recorded portion of the recording medium.

In addition, gloss uniformity is lost in an image recorded with such an ink containing a resin emulsion as described in Japanese Patent Application Laid-Open No. H09-208870, and unevenness becomes remarkable, so it cannot be said that the glossiness of the entire image is improved. Further, some degree of an improvement in glossiness is observed in an image recorded with the ink described in Japanese Patent Application Laid-Open No. 2006-282760, but a dispersant having a silicone component adsorbs to the pigment, with the result that aggregates of the particles of the pigment cause mutual slippage in a recording medium, and hence, the scratch resistance of the image reduces. In other words, it has been found that the use of the dispersant having a silicone component as a dispersant for the pigment in the ink can improve the glossiness of the image to some extent, but does not improve the scratch resistance.

Therefore, an object of the present invention is to provide an ink jet ink capable of recording an image having an unprecedentedly high level of scratch resistance and excellent in glossiness. To be specific, the object of the present invention is to provide an ink jet ink capable of providing an image having such a high level of scratch resistance that, even when the image is scratched with a nail under such a strong pressure that the non-recorded portion of a recording medium is damaged, nearly no coloring material is shaved off. Another object of the present invention is to provide an ink jet ink capable of providing an image having such a high level of glossiness that a recorded portion and a non-recorded portion are identical to each other in glossiness. Another object of the present invention is to provide an ink jet recording method, an ink cartridge, a recording unit, and an ink jet recording apparatus each of which is capable of providing an image having such a high level of scratch resistance as described above and excellent in glossiness.

The above objects are achieved by the present invention described below. An ink jet ink according to the present invention is specified in claim 1.

According to one aspect of the present invention, there is provided an ink jet ink capable of recording an image having much more excellent scratch resistance than that targeted by a conventional technique and excellent in glossiness. To be specific, the image recorded with the ink of the present invention has such a high level of scratch resistance that, even when the image is scratched with a nail under such a strong pressure that the non-recorded portion of a recording medium is damaged, nearly no coloring material is shaved off. Further, the image recorded with the ink of the present invention has such a high level of glossiness that the recorded portion and the non-recorded portion are identical to each other in glossiness. In addition, according to another aspect of the present invention, there are provided an ink jet recording method, an ink cartridge, a recording unit, and an ink jet recording apparatus as specified in claims 8, 9, 10 and 11, respectively, each of which is capable of stably providing images each having such a markedly high level of scratch resistance as described above and excellent glossiness. The dependent claims relate to further developments.

Further features of the present invention will become apparent from the following description of exemplary embodiments with reference to the attached drawings.

### BRIEF DESCRIPTION OF THE DRAWINGS

FIG. 1 is a perspective view of an ink jet recording apparatus.
FIG. 2 is a perspective view of the mechanism portion of the ink jet recording apparatus.
FIG. 3 is a sectional view of the ink jet recording apparatus.
FIG. 4 is a perspective view illustrating a state where an ink cartridge is mounted on a head cartridge.
FIG. 5 is an exploded perspective view of the head cartridge.
FIG. 6 is a front view illustrating recording element substrates in the head cartridge.

### DESCRIPTION OF THE EMBODIMENTS

Hereinafter, the present invention is described in more detail by way of a preferred embodiment.

The most salient feature of the present invention is that an ink jet ink (which may hereinafter be simply referred to as "ink") is formed of a graft polymer containing a nonionic unit represented by the following general formula (I) and a unit having a polysiloxane structure. 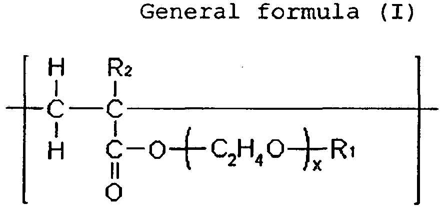 (In the general formula (I), R₁ and R₂ each independently represent a hydrogen atom or a methyl group, and x represents 1 or 2.)

In addition, when an image is recorded with the ink having such a constitution, the surface of the image becomes slippery, and the ink exerts leveling property, whereby the smoothness of the surface of the image can be improved. In addition, an aggregation reaction between a cationic compound and an ink component present on the surface of a recording medium can be suppressed. As a result, the scratch resistance and glossiness of the image can be improved. Those effects can be obtained by incorporating, into the structure of the ink, the graft polymer having the unit having a polysiloxane structure which has a function of making the surface of the image slippery and having the above nonionic unit which has a function of suppressing the above aggregation reaction to level the surface of the image.

Here, the circumstance in which the constitution of the ink of the present invention having such characteristics was found is described. One possible method of improving the scratch resistance and glossiness of an image is, for example, a method involving adding a resin emulsion which has high hydrophilicity and which improves the smoothness of the surface of the image to an ink containing a silicone-based polymer which improves the scratch resistance of the image. However, as described above, the investigations conducted by the inventors of the present invention have found that the addition of the resin emulsion to the ink containing the silicone-based polymer exerts an extremely small improving effect on the glossiness of an image to be obtained. The inventors consider the reason for the foregoing as described below. When an ink containing both the compounds is applied to a recording medium, the silicone-based polymer has high hydrophobicity, and the resin emulsion has high hydrophilicity, so the silicone-based polymer and the resin emulsion undergo a phase separation on the recording medium. As a result, functions inherent to the silicone-based polymer and the resin emulsion cancel each other, with the result that it may become unable to achieve compatibility between the scratch resistance and glossiness of the recorded image.

In view of the foregoing, the inventors of the present invention have conducted various investigations on the constitution of an ink capable of improving both the scratch resistance and glossiness of an image. As a result, the inventors have found it effective that a graft polymer in which a unit having a polysiloxane structure that improves the slipping property of the surface of an applied film and a nonionic unit of a structure having hydrophilicity are included is incorporated into the ink. In addition, additional investigations conducted by the inventors have found that the above-mentioned graft polymer of a structure containing a nonionic unit represented by the general formula (I) and a unit having a polysiloxane structure is suitably used as such a graft polymer. Upon application of an ink containing the graft polymer of such a structure to a recording medium, the unit having a polysiloxane structure, which is hydrophobic, and the above nonionic unit, which is hydrophilic, undergo a phase separation in the molecular structure of the polymer. However, the phase separation in this case is a microscopic one occurring in the molecular structure of the polymer, so the molecular structure of the above graft polymer is also maintained on the recording medium. Accordingly, the functions of those units do not cancel each other, so, probably, the surface of an image recorded with the ink becomes slippery, and the ink exerts leveling property. In addition, an aggregation reaction between a cationic compound and an ink component present on the surface of the recording medium can be suppressed, so the improvement of both the scratch resistance and glossiness of the image may have been achieved.

### Ink jet ink

Hereinafter, each component forming the ink of the present invention is described.

### Graft polymer

The graft polymer used in the ink of the present invention has at least a nonionic unit represented by the above general formula (I) and a unit having a polysiloxane structure. It should be noted that the term "unit" as used in the present invention hereinafter comprehends both the case where the number of repeating units forming the unit is one and the case where the number is two or more.

In addition, the graft polymer in the present invention is a "polymer having such a structure that branch polymers (side chains) are bonded to one stem polymer (main chain)." In addition, a method of determining whether the structure of a certain polymer is that of a graft polymer is, for example, the following method. That is, whether the structure of the polymer is that of a graft polymer can be determined by measuring the absolute molecular weight and molecular size of the polymer with a combination of gel permeation chromatography and a multi-angle light scattering detector. To be specific, the absolute molecular weight and the value of the molecular size measured by this method become mutually estranged more, the degree of branching of the polymer increases, so one can conclude that the polymer has the morphology of a graft polymer.

The graft polymer used in the present invention is preferably of such a structure that the functions of the unit having a polysiloxane structure and the above nonionic unit are clearly separated from each other in each molecule of the polymer in order that the respective functions can be efficiently exerted. To be specific, the above graft polymer is preferably of such a structure that the nonionic unit and the unit having a polysiloxane structure are each included in a side chain of the polymer in order that the functions of those units can be separated from each other in an additionally clear fashion. That is, one terminal of the above nonionic unit or of the unit having a polysiloxane structure preferably forms part of the main chain of the graft polymer. Further, the graft polymer is more preferably such that its side chains are constituted only of the above nonionic unit and the unit having a polysiloxane structure. The use of the graft polymer of such a structure can provide an improving effect on scratch resistance by the unit having a polysiloxane structure and an improving effect on scratch resistance and glossiness by the above nonionic unit in a particularly efficient fashion. In addition, not a high-molecular-weight unit but a low-molecular-weight unit is preferably used as the above nonionic unit. To be specific, the weight-average molecular weight of the above nonionic unit falls within the range of preferably 70 or more and 190 or less, or more preferably 110 or more and 190 or less. In this case, the molecules of the above nonionic unit can be caused to branch off from the main chain of the graft polymer evenly, in other words, the molecules of the above nonionic unit to branch off from the main chain can be delocalized; the delocalization is particularly effective in achieving both scratch resistance and glossiness of an image.

In the present invention, the content (mass%) of the above graft polymer in the ink is preferably 0.1 mass% or more and 10.0 mass% or less, more preferably 0.1 mass% or more and 5.0 mass% or less with reference to the total mass of the ink.

Further, investigations conducted by the inventors of the present invention have found that the condition that a proper amount of the ink is applied to a recording medium so that a large amount of the above graft polymer is oriented on the surface of the image is important for improving the scratch resistance of an image. In addition, in the present invention, the weight-average molecular weight of the above graft polymer is preferably set to fall within the range of 5,000 or more to 50,000 or less in order that a proper amount of the ink is applied to the recording medium. When the weight-average molecular weight is higher than 50,000, the viscosity of the ink increases, so the ink cannot obtain sufficient ejection stability, a proper amount of the ink cannot be applied to the recording medium, and hence, the image cannot obtain sufficient scratch resistance in some cases. In addition, when the weight-average molecular weight is lower than 5,000, the above graft polymer as well as an aqueous medium constituting the ink permeates into the recording medium, so the image cannot obtain sufficient scratch resistance in some cases.

In addition, in the present invention, it is preferred that the units forming the above graft polymer further include a unit having an acidic group; and the graft polymer have an acid value of 80 mgKOH/g or more and 150 mgKOH/g or less. Examples of the unit having an acidic group include units derived from monomers each having an acidic group such as monomers each having a carboxyl group such as acrylic acid, methacrylic acid, crotonic acid, itaconic acid, maleic acid, fumaric acid, citraconic acid, and 2-methacryloyloxymethylsuccinic acid, monomers each having a sulfonic group such as styrene sulfonate, and monomers each having a phosphate group such as vinyl phosphonic acid; and the anhydrides and salts of these monomers. In addition, the acid value of the above graft polymer can be adjusted by forming the graft polymer in such a manner that the polymer contains such a unit having an acidic group as described above and appropriately setting the structure and mass ratio of the unit having an acidic group. Investigations conducted by the inventors of the present invention have found that, when the acid value is larger than 150 mgKOH/g, the following problem may arise: the viscosity of the ink increases, so the ink cannot obtain sufficient ejection stability, a proper amount of the ink cannot be applied to a recording medium, and hence, the resultant image may not obtain sufficient scratch resistance. On the other hand, when the acid value is less than 80 mgKOH/g, the water solubility of the above graft polymer reduces, so the ink cannot obtain sufficient storage stability in some cases. Further, it may be difficult to maintain the ejection stability of an ink containing the above graft polymer having an acid value of less than 80 mgKOH/g upon ejection of the ink by an ink jet recording method utilizing thermal energy.

It should be noted that, when the unit having an acidic group is included in the graft polymer, the unit is preferably included in the main chain of the graft polymer. That is, the unit having an acidic group is preferably prevented from being included in side chains of the polymer. This is because when the unit having an acidic group is included in a side chain of the polymer, the action of each of the above nonionic unit and the unit having a polysiloxane structure is suppressed, so the scratch resistance and glossiness of an image cannot be sufficiently obtained in some cases. On the other hand, when the unit having an acidic group is included in the main chain, the action of each of the above nonionic unit and the unit having a polysiloxane structure is sufficiently exerted, whereby both scratch resistance and glossiness of an image can be achieved.

Further, in the present invention, the content (mass%) of the pigment in the ink is preferably 0.2 times or more and 2.0 times or less as large as the content (mass%) of the above graft polymer in the ink in terms of mass ratio, i.e. (the content of the pigment)/(the content of the above graft polymer) is preferably 0.2 or more and 2.0 or less. It should be noted that, in the present invention, the content of each of the pigment and the above graft polymer is the content of each component in the total mass of the ink. When the above mass ratio is less than 0.2, an image formed with the ink cannot obtain sufficient scratch resistance in some cases. A possible reason for the foregoing is as described below. When the above mass ratio is less than 0.2, the amount of the above graft polymer becomes large as compared to that of the pigment, so the above graft polymer may be present not only on the surface of the image but also in a pigment forming the image. In this case, the above graft polymer is present even between the particles of the pigment forming the image, and aggregates of the particles of the pigment become slippery, with the result that the image cannot obtain sufficient scratch resistance in some cases. On the other hand, when the mass ratio exceeds 2.0, the amount of the above graft polymer oriented on the surface of the image reduces, so the image cannot obtain sufficient scratch resistance in some cases.

Hereinafter, each unit forming the above graft polymer used in the present invention is described in more detail.

### Nonionic unit

The nonionic unit forming the above graft polymer used in the ink of the present invention has a structure represented by the following general formula (I). The nonionic unit of the structure is obtained by the copolymerization of a monomer represented by the following general formula (I') in which the number of repeating units, i.e., ethylene oxide groups, is 1 or 2, and the monomer has a polymerizable functional group at one of its terminals. Further, the graft polymer used in the present invention is preferably of such a structure that the vinyl group or vinylidene group of the monomer represented by the following general formula (I') serves as part of the main chain of the graft polymer, and a portion of the monomer ranging from the ester bond to R₁ branches off to serve as a side chain of the graft polymer. 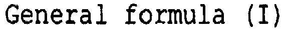 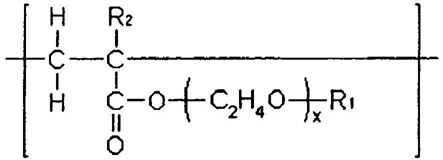 (In the general formula (I), R₁ and R₂ each independently represent a hydrogen atom or a methyl group, and x represents 1 or 2.) 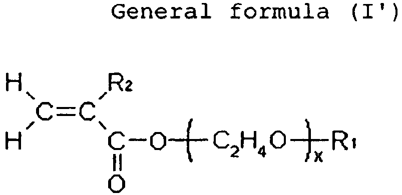 (In the general formula (I'), R₁ and R₂ each independently represent a hydrogen atom or a methyl group, and x represents 1 or 2.)

The number of repeating units, i.e., ethylene oxide groups, in the nonionic unit represented by the above general formula (I) used in the present invention needs to be 1 or 2: that is, x in the above general formula (I) needs to represent 1 or 2. When x in the above general formula (I) represents 3 or more, in the case where the above nonionic unit is branched off from the main chain of the graft polymer, sites having nonionic property tend to exist locally, so the hydrophilicity of the entirety of the above graft polymer becomes high. As a result, an image formed with the ink cannot obtain sufficient scratch resistance, and its water resistance becomes insufficient. In addition, when the hydrophilicity of the entirety of the above graft polymer becomes high as described above, the graft polymer acts like a surfactant in the ink. In this case, the above graft polymer enhances the permeability of the ink into a recording medium, and hence, the amount of the above graft polymer oriented on the outermost surface of the image reduces, so sufficient image scratch resistance cannot be obtained.

It should be noted that, when a unit having an ethylene oxide group of a structure different from that of the nonionic unit represented by the general formula (I) is further included in the graft polymer, the number of repeating units, i.e., ethylene oxide groups, in the unit is preferably 1 or 2. This is because the water resistance of an image formed with the ink may be insufficient as in the case of x in the nonionic unit represented by the general formula (I) represents 3 or more described above.

In addition, investigations conducted by the inventors of the present invention have found that, when a silicone graft polymer having an ionic unit instead of the above nonionic unit and a unit having a polysiloxane structure is incorporated into the ink, an improving effect on the glossiness of an image cannot be obtained. The inventors consider the reason for the foregoing as described below. For example, when an ink containing a silicone graft polymer having an anionic unit instead of the above nonionic unit is applied to a recording medium, the following phenomenon occurs. That is, a cationic compound in the recording medium, such as alumina, silica, or calcium carbonate, and the anionic unit as part of the constitution of the above polymer react with each other, so the aggregation of the components forming the ink is promoted. In this case, the aggregation of a pigment, the polymer, and the like occurs nonuniformly, with the result that no leveling property is exerted on the surface of an image formed with the ink, and the image cannot obtain sufficient glossiness.

The nonionic unit represented by the above general formula (I) is specifically, for example, a copolymer of a (meth)acrylate-based monomer. In addition, the above graft polymer used in the present invention may be formed of one kind of such a nonionic unit as described above, or may be formed of a combination of two or more kinds of such nonionic units as described above.

Examples of the (meth)acrylate-based monomer include 2-hydroxyethyl methacrylate, diethylene glycol monomethacrylate, 2-hydroxyethyl acrylate, diethylene glycol monoacrylate, methoxydiethylene glycol monomethacrylate, and methoxydiethylene glycol monoacrylate. In the present invention, of those monomers, 2-hydroxyethyl acrylate, 2-hydroxyethyl methacrylate, and methoxydiethylene glycol monomethacrylate are preferably used. As the (meth)acrylate-based monomer, for example, commercially available products such as BLEMMER PE-90, AE-90, and PME-100 (all of which are manufactured by NOF CORPORATION), and BHEA and HEMA (both of which are manufactured by NIPPON SHOKUBAI CO., LTD.) can be used.

In the present invention, the proportion of the nonionic unit represented by the above general formula (I) with reference to the total mass of the above graft polymer is preferably 5.0 mass% or more and 45.0 mass% or less. When the proportion is less than 5.0 mass%, the leveling property of the ink reduces, so the surface of an image formed with the ink does not become smooth, and the image cannot obtain sufficient glossiness in some cases. On the other hand, when the proportion is larger than 45.0 mass%, the image cannot obtain sufficient scratch resistance in some cases. This is because when the above proportion is larger than 45.0 mass%, the hydrophilicity of the above graft polymer becomes high, and the above graft polymer starts to exist stably in the ink, with the result that the above graft polymer is apt to permeate into a recording medium, and the amount of the above graft polymer oriented toward the surface of the image reduces in some cases.

### Unit having polysiloxane structure

An arbitrary unit may be used as the unit having a polysiloxane structure forming the above graft polymer used in the ink of the present invention as long as the unit has a polysiloxane structure. In the present invention, a unit represented by the following general formula (V) out of the units each having a polysiloxane structure is particularly preferably used. The unit represented by the general formula (V) is obtained by the copolymerization of a monomer represented by the following general formula (V') having a polymerizable functional group at one of its terminals. Further, the graft polymer used in the present invention is preferably of such a structure that the vinyl group or vinylidene group of the monomer represented by the following general formula (V') serves as part of the main chain of the graft polymer, and a portion of the monomer ranging from the ester bond to R₁₁ branches off to serve as a side chain of the graft polymer. In addition, the above graft polymer used in the present invention may be formed of one kind of a unit having a polysiloxane structure, or may be formed of a combination of two or more kinds of units each having a polysiloxane structure. 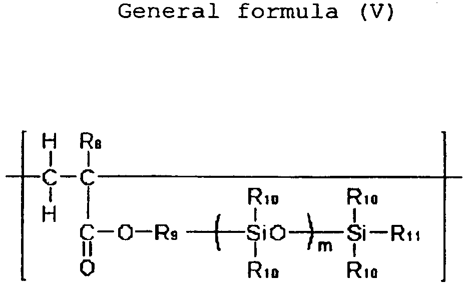 (In the general formula (V), R₈ represents a hydrogen atom or a methyl group, R₉ represents an alkylene group having 1 to 6 carbon atoms, R₁₀'s each independently represent a methyl group or a phenyl group, R₁₁ represents an alkyl group having 1 to 6 carbon atoms or a phenyl group, and m represents 1 to 150.) 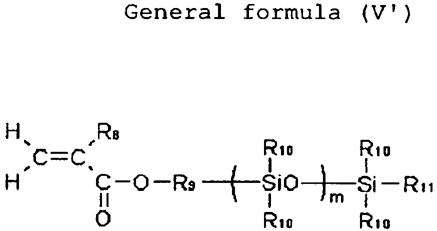 (In the general formula (V'), R₈ represents a hydrogen atom or a methyl group, R₉ represents an alkylene group having 1 to 6 carbon atoms, R₁₀'s each independently represent a methyl group or a phenyl group, R₁₁ represents an alkyl group having 1 to 6 carbon atoms or a phenyl group, and m represents 1 to 150.)

In addition, in the present invention, a commercial product such as a SILAPLANE FM-0711, FM-0721, or FM-0725 (manufactured by CHISSO CORPORATION) can be used as the monomer represented by the above general formula (V').

In the present invention, the proportion of the above unit having a polysiloxane structure with reference to the total mass of the above graft polymer is preferably 10.0 mass% or more and 40.0 mass% or less. When the proportion is less than 10.0 mass%, the amount of the above graft polymer oriented on the surface of an image formed with the ink reduces irrespective of the content of the above graft polymer in the ink, so the image cannot obtain sufficient scratch resistance in some cases. On the other hand, when the above proportion is larger than 40.0 mass%, the image cannot obtain sufficient scratch resistance in some cases. This is because in contrast to the foregoing, the amount of the above graft polymer oriented on the surface of an image increases, so the above graft polymer may be present not only on the surface of the image but also in a pigment layer of which the image is formed; in other words, the above graft polymer is present even between the particles of the pigment, and aggregates of the particles of the pigment become slippery in some cases.

### Other units

The above graft polymer used in the ink of the present invention needs to have at least the nonionic unit represented by the above general formula (I) and the unit having a polysiloxane structure described above, and preferably further has the unit having an acidic group described above. In addition, the above graft polymer used in the ink of the present invention may further have other units in addition to those units. In addition, in the present invention, by the same reason as in the case of the above-mentioned unit having an acidic group, other units are particularly preferably included in the main chain of the above graft polymer: that is, other units are particularly preferably prevented from being included in side chains of the polymer.

Other units are, for example, a copolymer of a nonionic monomer such as an ester compound. In addition, the above graft polymer used in the present invention may be formed of one kind of such other unit as described above, or may be formed of a combination of two or more kinds of such other units as described above.

Specific examples of the other unit include the units which are copolymerized form of following monomers: acrylates such as methyl acrylate, ethyl acrylate, and butyl acrylate; methacrylates such as methyl methacrylate, ethyl methacrylate, and butyl methacrylate; 3-sulfopropyl (meth)acrylate; bis-(3-sulfopropyl)itaconic ester; vinyl phosphate; bis(methacryloxyethyl)phosphate; diphenyl-2-methacryloloxyethyl phosphate; dibutyl-2-acryloyloxyethyl phosphate; dibutyl-2-methacryloyloxyethyl phosphate; and dioctyl-2-(meth)acryloyloxyethyl phosphate. Of those, methyl acrylate, butyl acrylate, methyl methacrylate, and butyl methacrylate are preferred. It should be noted that a pigment frequently used as a coloring material for an ink jet ink is often dispersed with an anionic polymer dispersant. In consideration of the stability of an ink containing such a pigment, the units forming the graft polymer are preferably free of a unit derived from a cationic monomer capable of reacting with the polymer.

### Other polymers

One or two or more kinds of polymers different from the above graft polymer can be incorporated into the ink of the present invention. Such polymer is incorporated into the ink for use as a dispersant for dispersing a pigment in the ink or for any other purpose as required, and an arbitrary polymer can be used as long as the polymer has water solubility.

Such polymer is specifically, for example, a block, random, or graft copolymer synthesized from at least two monomers (at least one of which is an anionic monomer) selected from, for example, such monomers as described below and derivatives of the monomers or a salt of the copolymer. Examples of the monomers include styrene, a styrene derivative, vinylnaphthalene, a vinylnaphthalene derivative, an aliphatic alcohol ester of an α,β-ethylenic unsaturated carboxylic acid, acrylic acid, an acrylic acid derivative, maleic acid, a maleic acid derivative, itaconic acid, an itaconic acid derivative, fumaric acid, a fumaric acid derivative, vinyl acetate, and vinyl pyrrolidone. A natural resin such as rosin, shellac, or starch can also be preferably used. The polymer for dispersing the pigment in the ink is preferably alkali-soluble.

The above-described other polymer has a weight-average molecular weight of preferably 1,000 or more and 30,000 or less, or more preferably 3,000 or more and 15,000 or less, and an acid value of preferably 100 mgKOH/g or more and 300 mgKOH/g or less. In addition, the content (mass%) of such other polymer in the ink is preferably 0.1 mass% or more and 10.0 mass% or less with reference to the total mass of the ink. In addition, the content (mass%) of the other polymer in the ink is preferably 0.2 times or more and 2.0 times or less as large as the content (mass%) of the above graft polymer in the ink in terms of mass ratio, i.e. (the content of the other polymer)/(the content of the above graft polymer) is preferably 0.2 or more and 2.0 or less. It should be noted that, in the present invention, the content of each of the other polymer and the above graft polymer is the content of each component in the total mass of the ink.

### Water-soluble organic compound

At least one kind of a water-soluble organic compound selected from the group consisting of compounds represented by the following general formulae (II), (III), and (IV) is preferably further incorporated into the ink of the present invention in addition to the graft polymer described above. It should be noted that, in the following description, the water-soluble organic compound belonging to the group consisting of the compounds represented by the following general formulae (II), (III), and (IV) may be abbreviated as "specific water-soluble organic compound." 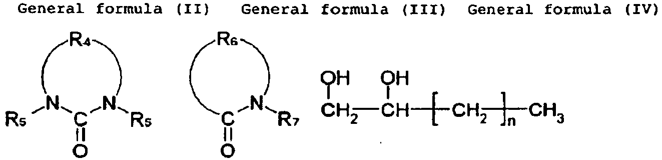 (In the general formula (II), R₄ represents an alkylene group which has 2 to 5 carbon atoms and which may have a substituent, and R₅'s each independently represent a hydrogen atom or an alkyl group which has 1 to 4 carbon atoms and which may have a substituent. In addition, in the general formula (III), R₆ represents an alkylene group which has 2 to 5 carbon atoms and which may have a substituent, and R₇ represents a hydrogen atom or an alkyl group which has 1 to 4 carbon atoms and which may have a substituent. In addition, in the general formula (IV), n represents a number of 1 to 3.)

Here, the reason why the above specific water-soluble organic compound is preferably further incorporated into the ink in addition to the above graft polymer indispensable to the present invention is described. First, as described above, it is important for improving the scratch resistance and glossiness of an image that a proper amount of the ink is applied to a recording medium so that a large amount of the above graft polymer is oriented on the surface of the image. In addition, the above nonionic unit forming the above graft polymer used in the ink of the present invention has high hydrophilicity, and the unit having a polysiloxane structure forming the graft polymer has high lipophilicity. Accordingly, multiple molecules of the above graft polymer may form an associated body in the ink. In addition, upon application of the ink containing the above graft polymer in such a state to the recording medium, additionally increasing the amount of the above graft polymer oriented on the surface of the image is important for improving the scratch resistance and glossiness of the image particularly significantly.

In view of the foregoing, the inventors of the present invention have conducted investigations, and as a result, have found that the scratch resistance and glossiness of the image can be improved particularly significantly by providing the ink with such a constitution that the ink contains the above graft polymer and the above specific water-soluble organic compound. In the ink of such a constitution, the associated body of the molecules of the above graft polymer is loosened. Here, a compound represented by the above general formula (II) or (III) being a nitrogen-containing heterocyclic compound has a function of loosening the associated body of the molecules of the above graft polymer in the ink, because the compound has a high affinity for the graft polymer having the hydrophilic unit and the lipophilic unit. In addition, the compound represented by the general formula (IV) being a 1,2-alkanediol acts like a surfactant, and has a function of loosening the associated body of the molecules of the above graft polymer in the ink, because the compound is of such a molecular structure that a hydrophilic portion and a lipophilic portion are clearly separated from each other. In other words, via such a mechanism, upon application of the ink of the constitution to the recording medium, molecules of the above graft polymer which do not form an associated body are uniformly oriented on the surface of the image with efficiency, so the scratch resistance and glossiness of the image may be improved particularly significantly.

It should be noted that a state where the associated body of the molecules of the above graft polymer is loosened in the ink can be confirmed by measuring the dynamic surface tension of the ink. For example, the dynamic surface tension of each of an ink into which the above specific water-soluble organic compound as well as the above graft polymer is incorporated and an ink into which the above specific water-soluble organic compound is not incorporated is measured at a certain life time. In this case, the ink in which the associated body of the molecules of the above graft polymer is not formed by virtue of the incorporation of the above specific water-soluble organic compound shows a lower dynamic surface tension at the life time than the ink into which the above specific water-soluble organic compound is not incorporated. This is because in the case of the ink in a state where the associated body of the molecules of the above graft polymer is loosened, a relatively large amount of molecules of the graft polymer are oriented on an interface between the ink and the air, so the dynamic surface tension of the ink reduces. In other words, when comparison between the dynamic surface tensions of those inks shows that the dynamic surface tension of the ink into which the above specific water-soluble organic compound is incorporated is lower than that of the other, it can be said that the associated body of the molecules of the above graft polymer is loosened in the ink. It should be noted that, for example, a Bubble Pressure Tensiometer BP2 (manufactured by KRUSS) can be used as an apparatus for measuring a dynamic surface tension.

The compounds represented by the general formula (II) and general formula (III) are nitrogen-containing heterocyclic compounds. Specific examples thereof include 2-pyrrolidone, N-methyl-2-pyrrolidone, 1,3-diemthyl-2-imidazolidinone, and ethylene urea. In addition, the compound represented by the general formula (IV) is 1,2-alkanediol. Specific examples thereof include 1,2-propanediol, 1,2-butanediol, 1,2-pentanediol, and 1,2-hexanediol. Of those compounds, at least one kind selected from 2-pyrrolidone, N-methyl-2-pyrrolidone, ethylene urea, and 1,2-hexanediol is particularly preferably used. Further, it is particularly preferred that the ink includes at least one kind selected from 2-pyrrolidone, N-methyl-2-pyrrolidone, and ethylene urea, and 1,2-hexanediol together.

In the present invention, the total content (mass%) of the compounds represented by the above general formulae (II), (III), and (IV) in the ink is preferably 2.0 times or more as large as the content (mass%) of the above graft polymer in the ink in terms of mass ratio, i.e. (the total content of the above specific water-soluble organic compound)/(the content of the above graft polymer) is preferably 2.0 or more. It should be noted that the content of each of the above specific water-soluble organic compound and the above graft polymer is the content of each component in the total mass of the ink. On the other hand, when the mass ratio is less than 2.0, the content of the above specific water-soluble organic compound in the ink reduces, and hence, the associated body of the molecules of the above graft polymer cannot be sufficiently loosened, so a significant improving effect on the scratch resistance and glossiness of an image formed with the ink cannot be obtained in some cases. In addition, the upper limit for the above mass ratio is preferably 40.0 or less, more preferably 20.0 or less, or particularly preferably 10.0 or less, especially 8.0 or less. When the upper limit for the above mass ratio is larger than 40.0, the viscosity of the ink increases, so the ink cannot obtain sufficient ejection stability. Therefore, it may be unable to apply a proper amount of the ink to a recording medium, and the image may be unable to obtain sufficient scratch resistance.

In addition, in the present invention, the total content (mass%) of the compounds represented by the above general formulae (II), (III), and (IV) in the ink is preferably 2.0 mass% or more with reference to the total mass of the ink. When the content is less than 2.0 mass%, the content of the above specific water-soluble organic compound in the ink reduces, and hence, the associated body of the molecules of the above graft polymer cannot be sufficiently loosened, so a significant improving effect on the scratch resistance and glossiness of an image formed with the ink cannot be obtained in some cases. In addition, an upper limit for the content of the above specific water-soluble organic compound is preferably 20.0 mass% or less. When the upper limit for the content is larger than 20.0 mass%, the viscosity of the ink increases, so the ink cannot obtain sufficient ejection stability. Therefore, it may be unable to apply a proper amount of the ink to a recording medium, and the image may be unable to obtain sufficient scratch resistance.

### Pigment

A pigment in a state of being dispersed with such a polymer dispersant as described above is preferably incorporated into the ink of the present invention. The content (mass%) of the pigment in the ink is preferably 0.1 mass% or more and 15.0 mass% or less, or more preferably 1.0 mass% or more and 10.0 mass% or less with reference to the total mass of the ink.

A pigment that can be used in the ink of the present invention is not particularly limited, and any one of the following inorganic and organic pigments can be used; an organic pigment is particularly preferably used in the present invention.

As the inorganic pigment, it is preferred to use carbon black such as furnace black, lamp black, acetylene black, and channel black. To be specific, for example, the following commercial products can be used: Raven 1170, Raven 1190 ULTRA-II, Raven 1200, Raven 1250, Raven 1255, Raven 1500, Raven 2000, Raven 3500, Raven 5000 ULTRA, Raven 5250, Raven 5750, and Raven 7000 (which are manufactured by Columbia Corporation); Black Pearls L, Regal 330R, Regal 400R, Regal 660R, Mogul L, Monarch 700, Monarch 800, Monarch 880, Monarch 900, Monarch 1000, Monarch 1100, Monarch 1300, Monarch 1400, Monarch 2000, and Valcan XC-72R (which are manufactured by Cabot Corporation); Color Black FW1, Color Black FW2, Color Black FW2V, Color Black FW18, Color Black FW200, Color Black S150, Color Black S160, Color Black S170, Printex 35, Printex U, Printex V, Printex 140U, Printex 140V, Special Black 6, Special Black 5, Special Black 4A, and Special Black 4 (manufactured by Degussa); No. 25, No. 33, No. 40, No. 47, No. 52, No. 900, No. 2300, MCF-88, MA 600, MA 7, MA 8, and MA 100 (manufactured by Mitsubishi Chemical Corporation). Of course, the present invention is not limited to the above carbon black.

In addition, carbon black newly prepared can also be used as the inorganic pigment. Of course, the present invention is not limited to the above carbon black, and any conventionally known carbon black can also be used. Other than carbon black, a magnetic substance fine particle such as magnetite or ferrite, titanium black, or the like may also be used as the inorganic pigment.

Specific examples of the organic pigment include: insoluble azo pigments such as toluidine red, toluidine maroon, Hansa yellow, benzidine yellow, and pyrazolone red; soluble azo pigments such as lithol red, helio bordeaux, pigment scarlet, and permanent red 2B; derivatives from vat dyes such as alizarin, indanthrone, and thioindigo maroon; phthalocyanine-based pigments such as phthalocyanine blue and phthalocyanine green; quinacridone-based pigments such as quinacridone red and quinacridone magenta; perylene-based pigments such as perylene red and perylene scarlet; isoindolinone-based pigments such as isoindolinone yellow and isoindolinone orange; imidazolone-based pigments such as benzimidazolone yellow, benzimidazolone orange, and benzimidazolone red; pyranthrone-based pigments such as pyranthrone red and pyranthrone orange; indigo-based pigments; condensed azo-based pigments; thioindigo-based pigments; diketo-pyrrolo-pyrrole-based pigments; flavanthrone yellow; acylamide yellow; quinophthalone yellow; nickel azo yellow; copper azomethine yellow; perynone orange; anthrone orange; dianthraquinone red; and dioxazine violet. Of course, the present invention is not limited thereto.

In addition, when the organic pigment is specified with a color index (C.I.) number, the following pigments may be used, for example: C.I. Pigment Yellow: 12, 13, 14, 17, 20, 24, 74, 83, 86, 93, 97, 109, 110, and 117; C.I. Pigment Yellow: 120, 125, 128, 137, 138, 147, 148, 150, 151, 153, 154, 166, 168, 180, and 185; C.I. Pigment Orange: 16, 36, 43, 51, 55, 59, 61, and 71; C.I. Pigment Red: 9, 48, 49, 52, 53, 57, 97, 122, 123, 149, 168, and 175; C.I. Pigment Red: 176, 177, 180, 192, 215, 216, 217, 220, 223, 224, 226, 227, 228, 238, 240, 254, 255, and 272; C.I. Pigment Violet: 19, 23, 29, 30, 37, 40, and 50; C.I. Pigment Blue: 15, 15:1, 15:3, 15:4, 15:6, 22, 60, and 64; C.I. Pigment Green: 7 and 36; and C.I. Pigment Brown: 23, 25, and 26. Of course, the present invention is not limited thereto.

### Aqueous medium

An aqueous medium that is a mixed solvent of water and a water-soluble organic solvent can be used in the ink of the present invention. The content (mass%) of the water-soluble organic solvent in the ink is preferably 3.0 mass% or more and 50.0 mass% or less with reference to the total mass of the ink. It should be noted that the content of the water-soluble organic solvent is a content including the specific water-soluble organic compound described above.

The water-soluble organic solvent is not particularly limited as long as it is water soluble. One kind of the following compounds may be used, or two or more kinds of them may be used in combination. Specifically, for example, the following water-soluble organic solvents can be used: alkanediols such as 1,3-propanediol, 1,3-butanediol, 1,4-butanediol, 1,5-pentanediol, and 1,6-hexanediol; glycol ethers such as diethylene glycol monomethyl (or ethyl) ether and triethylene glycol monoethyl (or butyl) ether; alkyl alcohols having 1 to 4 carbon atoms such as ethanol, isopropanol, n-butanol, isobutanol, sec-butanol, and tert-butanol; and carboxylic acid amides such as N,N-dimethyl formamide and N,N-dimethyl acetamide; ketones or ketoalcohols such as acetone, methylethyl ketone, 2-methyl-2-hydroxypentane-4-one; cyclic ethers such as tetrahydrofuran and dioxane; ethylene glycols such as glycerin, ethylene glycol, diethylene glycol, triethylene glycol, and tetraethylene glycol; polyols such as 1,2- or 1,3-propylene glycol, 1,2- or 1,4-butylene glycol, polyethylene glycol having an average molecular weight of 200 to 1,000, thiodiglycol, and 1,2,6-hexane triol; and glycols such as acetylene glycol derivatives.

Deionized water (ion-exchanged water) is preferably used as water. The water content (mass%) in the ink is preferably 50.0 mass% or more and 95.0 mass% or less with reference to the total mass of the ink.

### Other components

In addition to the above components, a moisture-retaining solid component such as urea, a urea derivative, trimethylolpropane, or trimethylolethane may be incorporated into the ink of the present invention. The content (mass%) of the moisture-retaining solid component in the ink is preferably 0.1 mass% or more and 20.0 mass% or less, or more preferably 3.0 mass% or more and 10.0 mass% or less with reference to the total mass of the ink.

Further, any one of the various additives such as a pH adjustor, a rust inhibitor, an antiseptic, a mildew-proofing agent, an antioxidant, and an anti-reducing agent may be incorporated into the ink of the present invention as required in order that the ink may have desired physical property values.

### Ink jet recording method

The ink of the present invention is used in an ink jet recording method of the present invention including ejecting the ink according to an ink jet system to perform recording on a recording medium. Examples of the ink jet recording method include a recording method involving applying mechanical energy to ink to eject the ink and a recording method involving applying thermal energy to ink to eject the ink. An ink jet recording method involving the utilization of thermal energy can be particularly preferably used in the present invention.

### Ink cartridge

An ink cartridge suitable for performing recording with the ink of the present invention is, for example, an ink cartridge of the present invention including an ink storage portion for storing the ink.

### Recording unit

A recording unit suitable for performing recording with the ink of the present invention is, for example, a recording unit of the present invention including: an ink storage portion for storing the ink; and a recording head for ejecting the ink. A recording unit in which the recording head applies thermal energy corresponding to a recording signal to the ink to eject the ink can be particularly preferably used. In the present invention, a recording head having a heat-generating portion liquid-contacting surface containing at least one of a metal and a metal oxide is particularly preferably used. Specific examples of at least one of the metal and the metal oxide forming the heat-generating portion liquid-contacting surface include metals such as Ta, Zr, Ti, Ni, and A1, and oxides of these metals.

### Ink jet recording apparatus

An ink jet recording apparatus suitable for performing recording with the ink of the present invention is, for example, an ink jet recording apparatus of the present invention including: an ink storage portion for storing the ink; and a recording head for ejecting the ink. Such an ink jet recording apparatus that thermal energy corresponding to a recording signal is applied to the ink in the recording head having the ink storage portion for storing the ink so that the ink may be ejected can be particularly preferably used.

Hereinafter, the schematic constitution of the mechanism portion of an ink jet recording apparatus is described. The ink jet recording apparatus is formed of, for example, a sheet feeding portion, a conveying portion, a carriage portion, a sheet discharge portion, and a cleaning portion, and an external packaging portion for protecting them and providing them with a design to achieve a role of each mechanism.

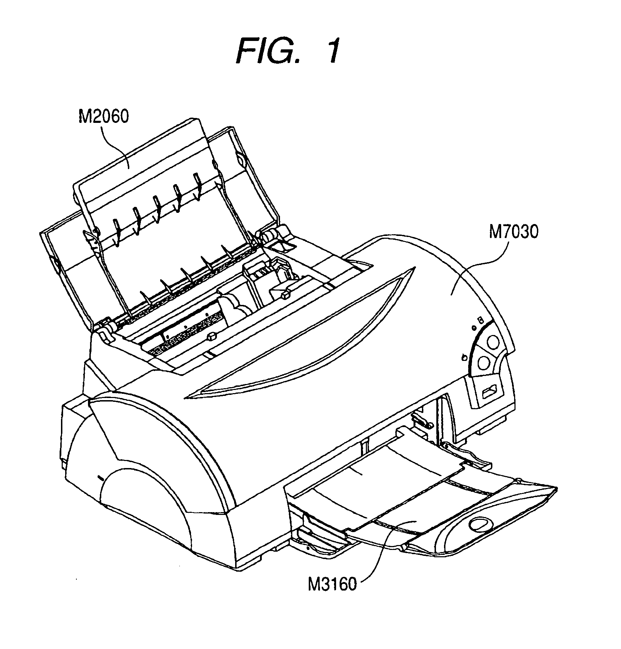

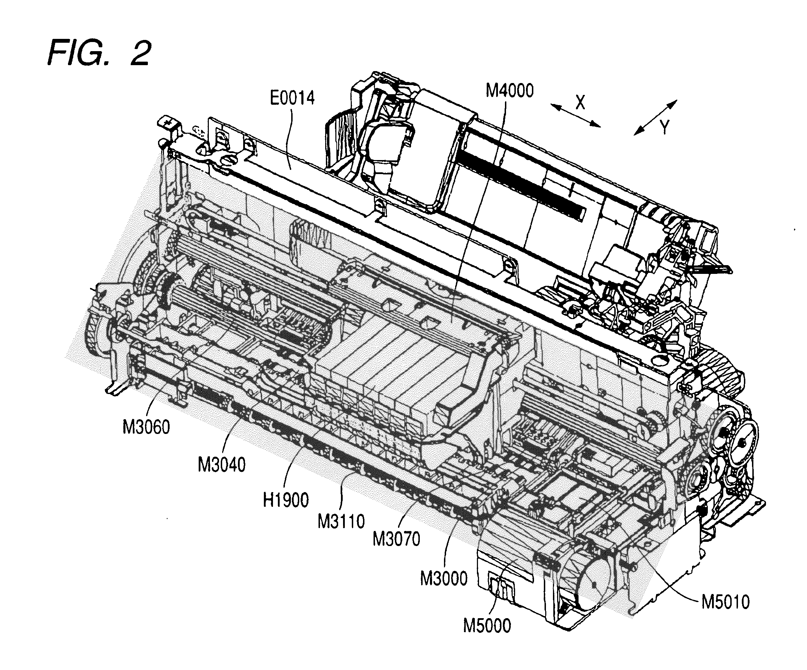

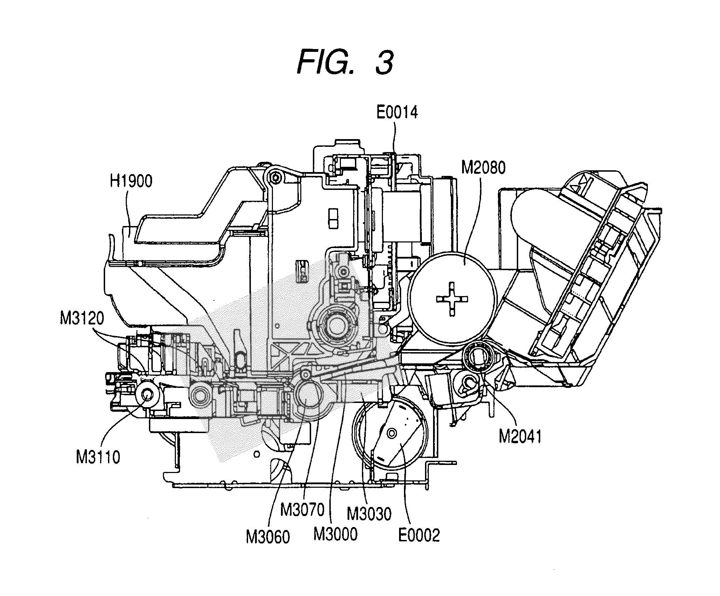

FIG. 1 is a perspective view of the ink jet recording apparatus. In addition, FIGS. 2 and 3 are views for describing the internal mechanism of the ink jet recording apparatus. FIG. 2 is a perspective view seen from an upper right portion, and FIG. 3 is a side sectional view of the ink jet recording apparatus.

Upon feeding of a sheet, only a predetermined number of recording media are sent to a nip portion formed of a sheet feeding roller M2080 and a separating roller M2041 in the sheet feeding portion including a sheet feeding tray M2060. The sent recording media are separated at the nip portion, and only the uppermost recording medium is conveyed. The recording medium conveyed to the conveying portion is guided by a pinch roller holder M3000 and a paper guide flapper M3030 to be conveyed to a roller pair formed of a conveying roller M3060 and a pinch roller M3070. The driving of an LF motor E0002 rotates the roller pair formed of the conveying roller M3060 and the pinch roller M3070, and the rotation causes the recording medium to be conveyed on a platen M3040.

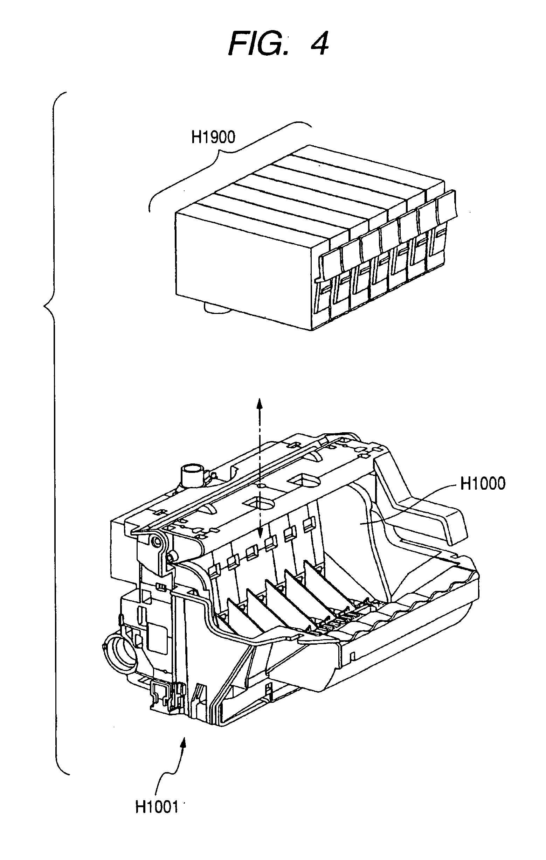

Upon recording of an image on a recording medium, the carriage portion places a recording head H1001 (FIG. 4; a detailed constitution is described later) at a position where a target image is recorded, and ejects ink to the recording medium in accordance with a signal from an electrical substrate E0014. While recording is performed by the recording head H1001, main scanning in which a carriage M4000 scans in a column direction and sub-scanning in which a recording medium is conveyed in a row direction by the conveying roller M3060 are alternately repeated, whereby an image is recorded on the recording medium. The recording medium on which the image has been recorded is conveyed in a state of being sandwiched at a nip between a first sheet discharge roller M3110 and a spur M3120, and is discharged to a sheet discharge tray M3160 in the sheet discharge portion.

It should be noted that the cleaning portion cleans the recording head H1001 before and after image recording. When a pump M5000 is caused to act in a state where an ejection orifice of the recording head H1001 is capped with a cap M5010, unnecessary ink and the like are sucked from the ejection orifice of the recording head H1001. In addition, the ink and the like remaining in the cap M5010 are sucked with the cap M5010 opened, whereby neither adhesion of the remaining ink nor any other trouble occurs.

### Constitution of recording head

The constitution of a head cartridge H1000 is described. FIG. 4 is a view illustrating the constitution of the head cartridge H1000, and is a view illustrating how ink cartridges H1900 are mounted on the head cartridge H1000. The head cartridge H1000 has the recording head H1001, a unit for mounting the ink cartridges H1900, and a unit for supplying ink from the ink cartridges H1900 to the recording head, and is attachably and detachably mounted on the carriage M4000.

The ink jet recording apparatus records an image with yellow, magenta, cyan, black, pale magenta, pale cyan, and green inks. Therefore, the ink cartridges H1900 are independently prepared for seven colors. It should be noted that the ink of the present invention is used as at least one of the above inks. In addition, as illustrated in FIG. 4, each of the ink cartridges H1900 is attachable and detachable to the head cartridge H1000. It should be noted that the ink cartridges H1900 can be attached and detached in a state where the head cartridge H1000 is mounted on the carriage M4000.

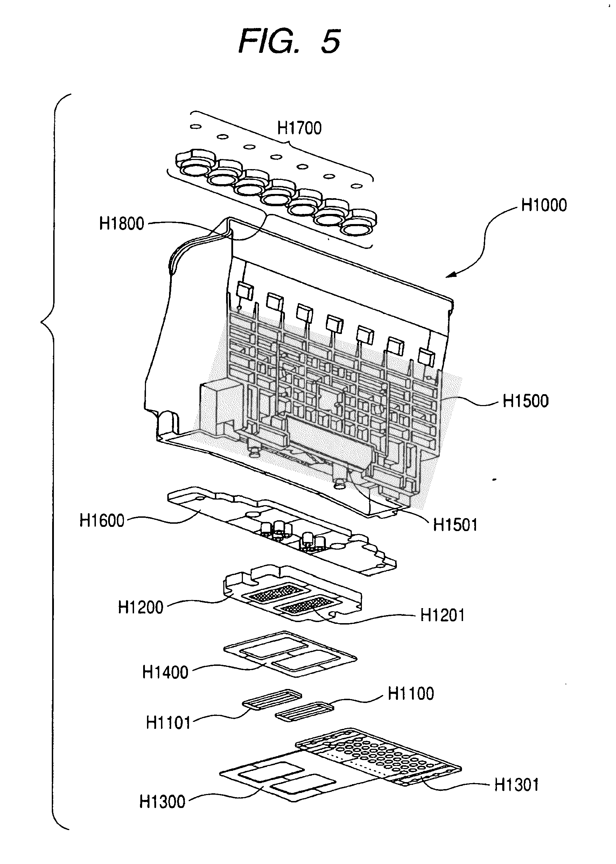

FIG. 5 is an exploded perspective view of the head cartridge H1000. The head cartridge H1000 is formed of, for example, recording element substrates, plates, an electric wiring substrate H1300, a cartridge holder H1500, a flow path forming member H1600, a filter H1700, and a seal rubber H1800. The recording element substrates are formed of a first recording element substrate H1100 and a second recording element substrate H1101, and the plates are formed of a first plate H1200 and a second plate H1400.

Each of the first recording element substrate H1100 and the second recording element substrate H1101 is an Si substrate having multiple recording elements (nozzles) for ejecting ink formed on one of its surfaces by photolithography. Electric wiring made of A1 or the like for supplying power to each recording element is formed by a film formation technique, and multiple ink flow paths corresponding to the individual recording elements are also formed by photolithography. Further, ink supply orifices for supplying ink to the multiple ink flow paths are formed so as to open on the rear surface of each substrate.

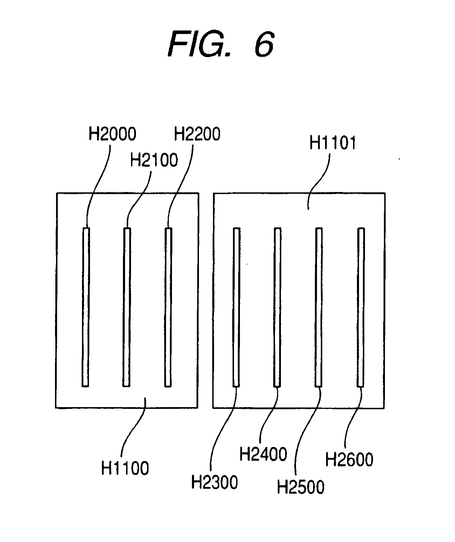

FIG. 6 is an enlarged front view for describing the constitution of each of the first recording element substrate H1100 and the second recording element substrate H1101. Reference symbols H2000 to H2600 represent recording element trains (which may hereinafter be referred to as "nozzle trains") corresponding to different ink colors. The first recording element substrate H1100 has nozzle trains for three colors formed in itself: the nozzle train H2000 for the yellow ink, the nozzle train H2100 for the magenta ink, and the nozzle train H2200 for the cyan ink. The second recording element substrate H1101 has nozzle trains for four colors formed in itself: the nozzle train H2300 for the pale cyan ink, the nozzle train H2400 for the black ink, the nozzle train H2500 for the green ink, and the nozzle train H2600 for the pale magenta ink.

Each nozzle train is formed of 768 nozzles arranged at an interval of 1,200 dpi (dot/inch; reference value) in the direction in which a recording medium is conveyed (sub-scanning direction). In addition, each nozzle ejects about 2 pl of ink. Accordingly, an opening area in each ejection orifice is set to about 100 µm².

Hereinafter, description is given with reference to FIGS. 4 and 5. The first recording element substrate H1100 and the second recording element substrate H1101 are bonded and fixed to the first plate H1200. Ink supply orifices H1201 for supplying ink to the first recording element substrate H1100 and the second recording element substrate H1101 are formed in the first plate H1200. Further, the second plate H1400 having openings is bonded and fixed to the first plate H1200. The second plate H1400 holds the electric wiring substrate H1300 so that the electric wiring substrate H1300, the first recording element substrate H1100, and the second recording element substrate H1101 are electrically connected.

The electric wiring substrate H1300 applies an electrical signal for causing each of the nozzles formed on the first recording element substrate H1100 and the second recording element substrate H1101 to eject ink. The electric wiring substrate H1300 has: electric wiring corresponding to each of the first recording element substrate H1100 and the second recording element substrate H1101; and an external signal input terminal H1301 which is positioned at an end portion of the electric wiring to receive an electrical signal from the ink jet recording apparatus. The external signal input terminal H1301 is positioned and fixed to the back surface side of the cartridge holder H1500.

The flow path forming member H1600 is fixed by, for example, ultrasonic welding to the cartridge holder H1500 that holds the ink cartridges H1900. Thus, an ink flow path H1501 passing from the ink cartridges H1900 to the first plate H1200 is formed. The filter H1700 is provided for an end portion on the ink cartridge side of the ink flow path H1501 engaged with the ink cartridges H1900, so the filter H1700 can prevent dust from entering from the outside to the ink flow path H1501. In addition, the seal rubber H1800 is mounted on the portion at which the ink flow path H1501 is engaged with the ink cartridges H1900 so as to be capable of preventing ink from evaporating from the portion.

Further, as described above, the head cartridge H1000 is formed by connecting a cartridge holder portion and the recording head portion H1001 through bonding or the like. It should be noted that the cartridge holder portion is formed of the cartridge holder H1500, the flow path forming member H1600, the filter H1700, and the seal rubber H1800. In addition, the recording head portion H1001 is formed of the first recording element substrate H1100 and the second recording element substrate H1101, the first plate H1200, the electric wiring substrate H1300, and the second plate H1400.

It should be noted that description has been given here by taking, as an embodiment of a recording head, a recording head according to a thermal ink jet system that performs recording with an electrothermal transducer (recording element) which generates thermal energy for causing ink to generate film boiling in accordance with an electrical signal. With regard to the representative constitution and principle of the system, it is preferably performed on the basis of basic principles disclosed in, for example, US Patent No. 4,723,129 and US Patent No. 4,740,796. This system is applicable to any one of the so-called on-demand type and continuous type recording heads.

Particularly effective is the application of the thermal ink jet system to the on-demand type recording head. In the case of the on-demand type recording head, at least one driving signal which corresponds to recording information and which causes a sudden increase in temperature exceeding nuclear boiling is applied to an electrothermal transducer placed in correspondence with a liquid flow path that holds ink. Thus, the electrothermal transducer is caused to generate thermal energy, and the ink is caused to generate film boiling, whereby an air bubble in the ink can be formed so as to be in one-to-one correspondence with the driving signal. The growth and contraction of the air bubble result in the ejection of the ink through an ejection orifice, whereby at least one droplet is formed. The driving signal is more preferably of a pulse shape because the growth and contraction of an air bubble are performed immediately and properly, so the ejection of the ink particularly excellent in responsiveness can be performed.

In addition, the ink of the present invention can be preferably used in such an ink jet recording apparatus utilizing mechanical energy as described below as well as in an ink jet recording apparatus according to the thermal ink jet system. The ink jet recording apparatus includes a nozzle forming substrate having multiple nozzles, a pressure generating element which is placed so as to be opposed to the nozzles and which is formed of a piezoelectric material and a conductive material, and ink filling the surroundings of the pressure generating element, and the pressure generating element is displaced by an applied voltage so that the ink is ejected from each nozzle.

The ink jet recording apparatus is not limited to the apparatus as described above in which a recording head and an ink cartridge are separated, and an apparatus in which the recording head and the ink cartridge are integrated so as to be unseparable may be used as the apparatus. Further, the ink cartridge may be separably or unseparably integrated with the recording head to be mounted on the carriage, or may be provided for a fixing site of the ink jet recording apparatus to supply ink to the recording head through an ink supply member such as a tube. In addition, when the ink cartridge is provided with a constitution for applying a preferable negative pressure to the recording head, for example, the following constitution can be adopted: an absorber is placed in an ink storage portion of the ink cartridge, or the ink cartridge has a flexible ink storage bag and a spring portion that applies, to the bag, a bias in the direction in which the internal volume of the bag is expanded. In addition, the ink jet recording apparatus may adopt such a serial recording mode as described above, or may be in the form of a line printer obtained by aligning recording elements over the range corresponding to the entire width of a recording medium.

### Examples

Hereinafter, the present invention is described specifically by way of examples and comparative examples. However, the present invention is by no means limited by the following examples unless going beyond the gist of the present invention. It should be noted that the terms "part(s)" and "%" mean "part(s) by mass" and "mass%", respectively unless otherwise stated.

### Synthesis of silicone graft polymer

Graft Polymers 1 to 23 being silicone graft polymers were each synthesized in accordance with the following procedure. It should be noted that a conventionally known polymerization method can be employed as a method for the synthesis. In the examples, Graft Polymers 1 to 23 were each synthesized by employing the following polymerization method. First, the respective monomers and azobisisobutyronitrile were loaded into a flask provided with a stirring machine, a temperature gauge, and a nitrogen-introducing pipe according to the composition shown in Table 1 below, and the mixture was subjected to a polymerization reaction with 500 parts of 1-methoxy-2-propanol as a solvent under nitrogen gas reflux at a temperature of 110°C for 4 hours. The solution containing a copolymer thus obtained was dried under reduced pressure, whereby the copolymer was obtained. After 25 parts of methyl ethyl ketone was added as a solvent to dissolve the resultant copolymer, 2 parts of a 30% aqueous solution of potassium hydroxide was added to the solution to neutralize part of the salt-generating groups of the copolymer. Further, 300 parts of ion-exchanged water was added to the mixture, and the whole was stirred. After that, the solvent was removed under reduced pressure at a temperature of 60°C, and furthermore, the residue was concentrated by removing part of water, whereby an aqueous solution of a graft polymer having a solid concentration of 20.0% was obtained. The absolute molecular weight and molecular size of each of Graft Polymers 1 to 23 thus obtained were measured with a combination of a gel permeation chromatography apparatus (manufactured by Shimadzu Corporation) and a multi-angle light scattering detector (manufactured by SHOKO Co.). As a result, in each of the measurements of the graft polymers 1 to 23, the absolute molecular weight and the measured value of the molecular size were largely mutually estranged, and from the structures of the monomers used it was confirmed that each of the graft polymers was of such a structure that a unit having a polysiloxane structure and a nonionic unit branched off from the main chain of the graft polymer to serve as side chains.

It should be noted that '(*1)' to '(*6)' in Table 1 below represent the following monomers.
(*1): SILAPLANE FM-0711 (manufactured by CHISSO CORPORATION; a monomer having a polysiloxane structure represented by the general formula (V') with a number-average molecular weight of about 1,000)
(*2): BHEA (product name: manufactured by NIPPON SHOKUBAI CO., LTD.; a nonionic monomer represented by the general formula (I') in which R₁ and R₂ each represent a hydrogen atom and x represents 1)
(*3): HEMA (product name: manufactured by NIPPON SHOKUBAI CO., LTD.; a nonionic monomer represented by the general formula (I') in which R₁ represents a hydrogen atom, R₂ represents a methyl group and x represents 1)
(*4): BLEMMER PME-100 (product name: manufactured by NOF Corporation; a nonionic monomer represented by the general formula (I') in which R₁ and R₂ each represent a methyl group and x represents 2)
(*5): BLEMMER PME-200 (product name: manufactured by NOF Corporation; a nonionic monomer represented by the general formula (I') in which R₁ and R₂ each represent a methyl group and x represents about 4)
(*6): BLEMMER PME-1000 (product name: manufactured by NOF Corporation; a nonionic monomer represented by the general formula (I') in which R₁ and R₂ each represent a methyl group and x represents about 23)

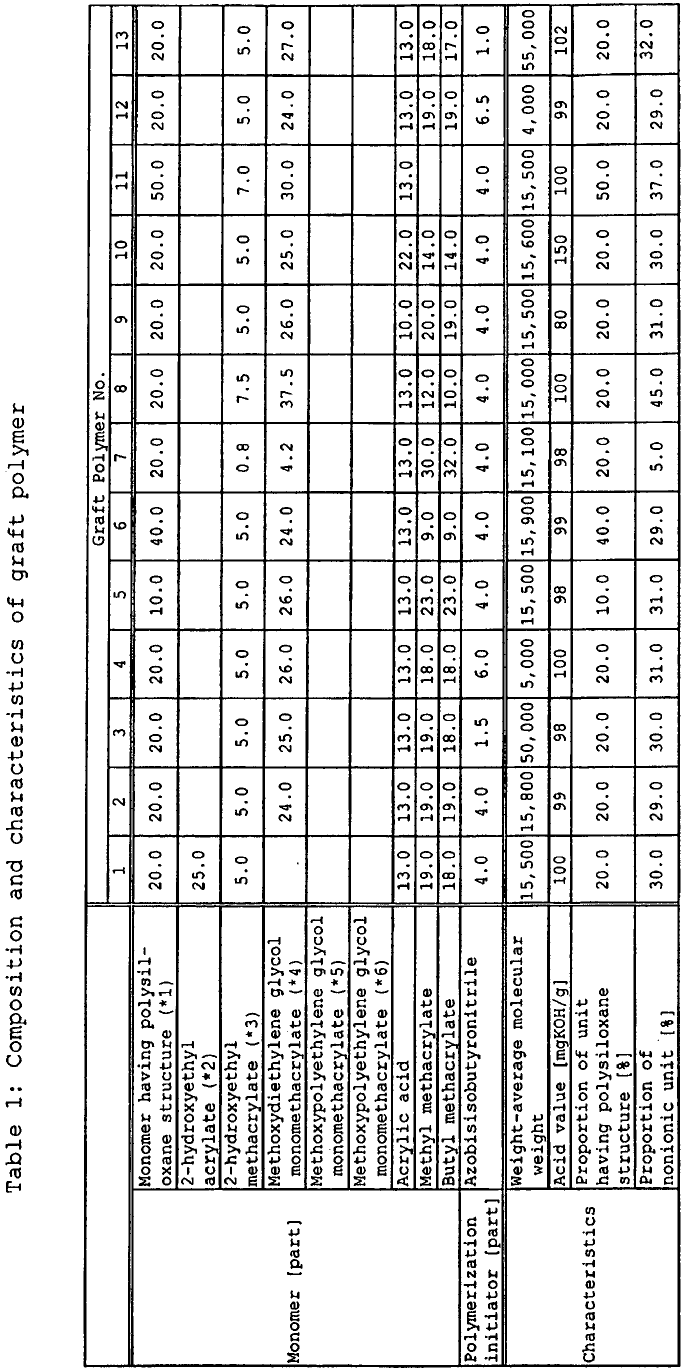

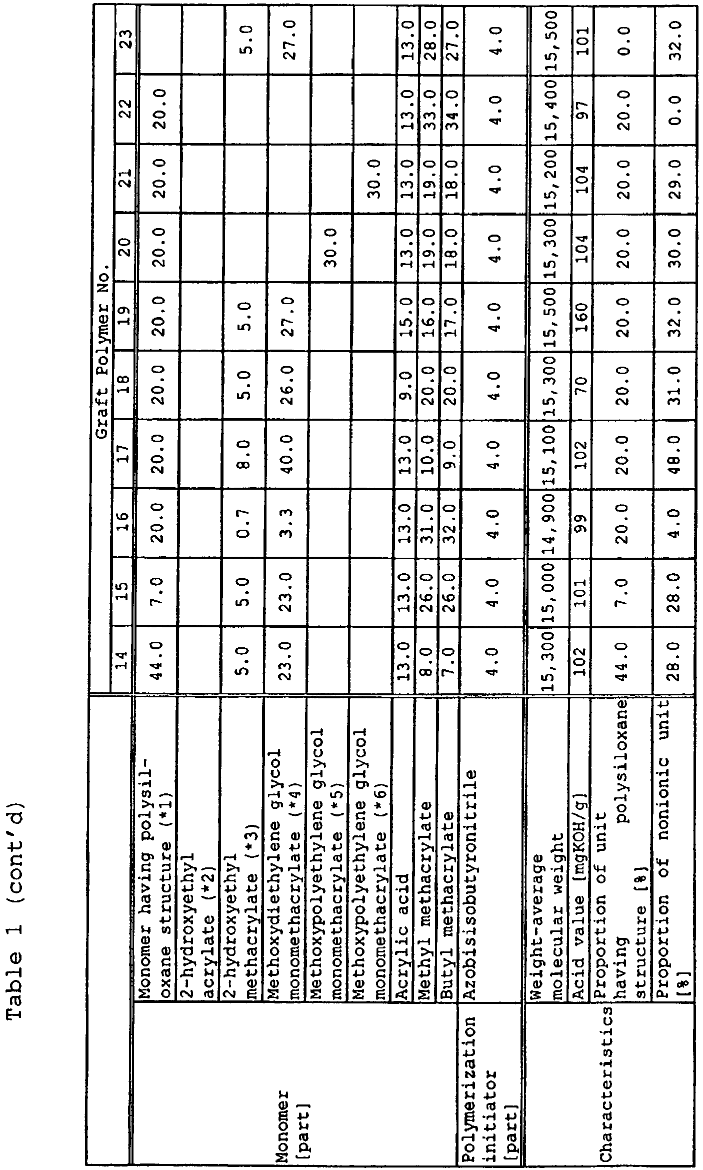

### Preparation of pigment dispersion liquid

### Preparation of Pigment Dispersion Liquid 1

10 parts of carbon black, 6 parts of glycerin, 10 parts of a polymer (dispersant), and 74 parts of water were loaded into a sand mill (manufactured by KANEDA SCIENTIFIC CO., LTD.) filled with zirconia beads having a diameter of 0.6 mm at a ratio of 70%, and were then subjected to a dispersion process at 1,500 rpm for 5 hours. Carbon black used here had a specific surface area of 220 m²/g and a DBP oil absorption of 130 ml/100 g. In addition, a random copolymer containing styrene, methyl acrylate, and acrylic acid at a copolymerization ratio (mass ratio) of 58:25:17 and having a weight-average molecular weight of 4,000 and an acid value of 130 mgKOH/g was used as the polymer. It should be noted that the polymer was used in the form of an aqueous solution prepared in advance by adding potassium hydroxide in an amount equivalent to the above acid value and water to the polymer; and stirring the mixture at a temperature of 80°C. After that, the dispersed product was centrifuged at 5,000 rpm for 10 minutes so that an aggregated component was removed. Further, the remainder was diluted with water so that the concentration of each of the pigment and the polymer was adjusted such that the content of the pigment was 2.5%, and the content of the polymer was 2.5%. Thus, Pigment Dispersion Liquid 1 was obtained.

### Preparation of Pigment Dispersion Liquid 2

Pigment Dispersion Liquid 2 having a pigment content of 2.5% and a polymer content of 2.5% was obtained in the same manner as in the preparation of Pigment Dispersion Liquid 1 except that a C.I. Pigment Blue 15:3 as a cyan pigment was used instead of carbon black.

### Preparation of Pigment Dispersion Liquid 3

Pigment Dispersion Liquid 3 having a pigment content of 2.5% and a polymer content of 2.5% was obtained in the same manner as in the preparation of Pigment Dispersion Liquid 1 except that a C.I. Pigment Red 122 as a magenta pigment was used instead of carbon black.

### Preparation of ink

The respective components were mixed according to the composition shown in Table 2 below, and the mixture was sufficiently stirred. After that, the resultant was filtrated under pressure with a polypropylene filter having a pore size of 1.2 µm (manufactured by Nihon Pall Ltd.), whereby an ink of each of the examples and comparative examples was prepared. It should be noted that the content of a graft polymer shown in Table 2 below was a value in terms of solid. In addition, in Table 2 below, '(*1)' represents a polyethylene glycol having an average molecular weight of 600, and '(*2)' represents a surfactant (manufactured by Kawaken Fine Chemicals Co., Ltd.). In addition, the term "specific water-soluble organic compound" refers to a water-soluble organic compound belonging to the group consisting of the compounds represented by the general formulae (II), (III), and (IV). In addition, the term "specific graft polymer" in Table 2 below refers to a graft polymer used in the present invention; in the examples, this term refers to Graft Polymers 1 to 19.

**Table 2-1: Composition of ink**

| | Example | | | | | | | | | | | | | | | |
|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 |
| Pigment dispersion liquid 1 | 40.0 | 40.0 | 40.0 | 40.0 | 40.0 | 40.0 | 40.0 | 40.0 | 40.0 | 40.0 | 40.0 | 40.0 | 40.0 | 40.0 | 40.0 | 40.0 |
| Pigment dispersion liquid 2 | | | | | | | | | | | | | | | | |
| Pigment dispersion liquid 3 | | | | | | | | | | | | | | | | |
| Graft polymer 1 | 2.0 | | | | | | | | | | | | | | | |
| Graft polymer 2 | | 2.0 | | | | | | | | | | | | | | |
| Graft polymer 3 | | | 2.0 | | | | | | | | | | | | | |
| Graft polymer 4 | | | | 2.0 | | | | | | | | | | | | |
| Graft polymer 5 | | | | | 2.0 | | | | | | | | | | | |
| Graft polymer 6 | | | | | | 2.0 | | | | | | | | | | |
| Graft polymer 7 | | | | | | | 2.0 | | | | | | | | | |
| Graft polymer 8 | | | | | | | | 2.0 | | | | | | | | |
| Graft polymer 9 | | | | | | | | | 2.0 | | | | | | | |
| Graft polymer 10 | | | | | | | | | | 2.0 | | | | | | |
| Graft polymer 11 | | | | | | | | | | | 2.0 | | | | | |
| Graft polymer 12 | | | | | | | | | | | | 2.0 | | | | |
| Graft polymer 13 | | | | | | | | | | | | | 2.0 | | | |
| Graft polymer 14 | | | | | | | | | | | | | | 2.0 | | |
| Graft polymer 15 | | | | | | | | | | | | | | | 2.0 | |
| Graft polymer 16 | | | | | | | | | | | | | | | | 2.0 |
| Graft polymer 17 | | | | | | | | | | | | | | | | |
| Graft polymer 18 | | | | | | | | | | | | | | | | |
| Graft polymer 19 | | | | | | | | | | | | | | | | |
| Graft polymer 20 | | | | | | | | | | | | | | | | |
| Graft polymer 21 | | | | | | | | | | | | | | | | |
| Graft polymer 22 | | | | | | | | | | | | | | | | |
| Graft polymer 23 | | | | | | | | | | | | | | | | |
| Glycerin | 15.0 | 15.0 | 15.0 | 15.0 | 15.0 | 15.0 | 15.0 | 15.0 | 15.0 | 15.0 | 15.0 | 15.0 | 15.0 | 15.0 | 15.0 | 15.0 |
| Polyethylene glycol (*1) | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| Acetylenol E100 (*2) | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Ethylene urea | | | | | | | | | | | | | | | | |
| 2-pyrrolidone | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| N-methyl-2-pyrrolidone | | | | | | | | | | | | | | | | |
| 1,2-hexanediol | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| Pure water | 33.0 | 33.0 | 33.0 | 33.0 | 33.0 | 33.0 | 33.0 | 33.0 | 33.0 | 33.0 | 33.0 | 33.0 | 33.0 | 33.0 | 33.0 | 33.0 |
| Graft Polymer No. | 1 | 2 | 3 | 4 | 5 | 6 | 7 | 8 | 9 | 10 | 11 | 16 | 17 | 18 | 19 | 20 |
| Weight-average molecular weight | 15,500 | 15,800 | 50,000 | 5,000 | 15,500 | 15,900 | 15,100 | 15,000 | 15,500 | 15,600 | 15,500 | 4,000 | 55,000 | 15,300 | 15,000 | 14,900 |
| Acid value [mgKOH/g] | 100 | 99 | 98 | 100 | 98 | 99 | 98 | 100 | 80 | 150 | 100 | 99 | 102 | 102 | 101 | 99 |
| Proportion of unit having polysiloxane structure [%] | 20.0 | 20.0 | 20.0 | 20.0 | 10.0 | 40.0 | 20.0 | 20.0 | 20.0 | 20.0 | 50.0 | 20.0 | 20.0 | 44.0 | 7.0 | 20.0 |
| Proportion of nonionic unit [%] | 30.0 | 29.0 | 30.0 | 31.0 | 31.0 | 29.0 | 5.0 | 45.0 | 31.0 | 30.0 | 37.0 | 29.0 | 32.0 | 28.0 | 28.0 | 4.0 |
| Content of pigment [%] | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Content of specific graft polymer [%] | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| Content of specific water-soluble organic compound [%] | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| Content of pigment/content of specific graft polymer | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Content of specific water-soluble organic compound/content of specific graft polymer | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |

**Table 2-2: Composition of ink**

| | Example | | | | | | | | | | | | | | | |
|---|---|---|---|---|---|---|---|---|---|---|---|---|---|---|---|---|
| | 17 | 18 | 19 | 20 | 21 | 22 | 23 | 24 | 25 | 26 | 27 | 28 | 29 | 30 | 31 | 32 |
| Pigment dispersion liquid 1 | 40.0 | 40.0 | 40.0 | 40.0 | 40.0 | 40.0 | 40.0 | 40.0 | 40.0 | 40.0 | 40.0 | 40.0 | 40.0 | 40.0 | 40.0 | 40.0 |
| Pigment dispersion liquid 2 | | | | | | | | | | | | | | | | |
| Pigment dispersion liquid 3 | | | | | | | | | | | | | | | | |
| Graft polymer 1 | | | | | | | | | | | | | | | | |
| Graft polymer 2 | | | | 0.5 | 5.0 | 2.0 | 2.0 | 2.0 | 2.0 | 2.0 | 2.0 | 0.5 | 0.5 | 0.5 | 0.5 | 3.0 |
| Graft polymer 3 | | | | | | | | | | | | | | | | |
| Graft polymer 4 | | | | | | | | | | | | | | | | |
| Graft polymer 5 | | | | | | | | | | | | | | | | |
| Graft polymer 6 | | | | | | | | | | | | | | | | |
| Graft polymer 7 | | | | | | | | | | | | | | | | |
| Graft polymer 8 | | | | | | | | | | | | | | | | |
| Graft polymer 9 | | | | | | | | | | | | | | | | |
| Graft polymer 10 | | | | | | | | | | | | | | | | |
| Graft polymer 11 | | | | | | | | | | | | | | | | |
| Graft polymer 12 | | | | | | | | | | | | | | | | |
| Graft polymer 13 | | | | | | | | | | | | | | | | |
| Graft polymer 14 | | | | | | | | | | | | | | | | |
| Graft polymer 15 | | | | | | | | | | | | | | | | |
| Graft polymer 16 | | | | | | | | | | | | | | | | |
| Graft polymer 17 | 2.0 | | | | | | | | | | | | | | | |
| Graft polymer 18 | | 2.0 | | | | | | | | | | | | | | |
| Graft polymer 19 | | | 2.0 | | | | | | | | | | | | | |
| Graft polymer 20 | | | | | | | | | | | | | | | | |
| Graft polymer 21 | | | | | | | | | | | | | | | | |
| Graft polymer 22 | | | | | | | | | | | | | | | | |
| Graft polymer 23 | | | | | | | | | | | | | | | | |
| Glycerin | 15.0 | 15.0 | 15.0 | 15.0 | 15.0 | 15.0 | 15.0 | 15.0 | 15.0 | 15.0 | 15.0 | 15.0 | 15.0 | 15.0 | 15.0 | 15.0 |
| Polyethylene glycol (*1) | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| Acetylenol E100 (*2) | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Ethylene urea | | | | | | 4.0 | | | | | | | | | | |
| 2-pyrrolidone | 2.0 | 2.0 | 2.0 | 2.0 | 2.0 | | 4.0 | | | | 6.0 | 2.0 | 2.5 | 5.0 | 10.0 | 3.0 |
| N-methyl-2-pyrrolidone | | | | | | | | 4.0 | | | | | | | | |
| 1,2-hexanediol | 2.0 | 2.0 | 2.0 | 2.0 | 2.0 | | | | 4.0 | | 10.0 | | 2.5 | 5.0 | 10.0 | 3.0 |
| Pure water | 33.0 | 33.0 | 33.0 | 34.5 | 30.0 | 33.0 | 33.0 | 33.0 | 33.0 | 37.0 | 21.0 | 36.5 | 33.5 | 28.5 | 18.5 | 30.0 |
| Graft Polymer No. | 21 | 22 | 23 | 2 | 2 | 2 | 2 | 2 | 2 | 2 | 2 | 2 | 2 | 2 | 2 | 2 |
| Weight-average molecular weight | 15,100 | 15,300 | 15,500 | 15,800 | 15,800 | 15,800 | 15,800 | 15,800 | 15,800 | 15,800 | 15,800 | 15,800 | 15,800 | 15,800 | 15,800 | 15,800 |
| Acid value [mgKOH/g] | 102 | 70 | 160 | 99 | 99 | 99 | 99 | 99 | 99 | 99 | 99 | 99 | 99 | 99 | 99 | 99 |
| Proportion of unit having polysiloxane structure [%] | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 |
| Proportion of nonionic unit [%] | 30.0 | 31.0 | 32.0 | 29.0 | 29.0 | 29.0 | 29.0 | 29.0 | 29.0 | 29.0 | 29.0 | 29.0 | 29.0 | 29.0 | 29.0 | 29.0 |
| Content of pigment [%] | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Content of specific graft polymer [%] | 2.0 | 2.0 | 2.0 | 0.5 | 5.0 | 2.0 | 2.0 | 2.0 | 2.0 | 2.0 | 2.0 | 0.5 | 0.5 | 0.5 | 0.5 | 3.0 |
| Content of specific water-soluble organic compound [%] | 4.0 | 4.0 | 4.0 | 4.0 | 4.0 | 4.0 | 4.0 | 4.0 | 4.0 | 0.0 | 16.0 | 2.0 | 5.0 | 10.0 | 20.0 | 6.0 |
| Content of pigment/content of specific graft polymer | 0.5 | 0.5 | 0.5 | 2.0 | 0.2 | 0.5 | 0.5 | 0.5 | 0.5 | 0.5 | 0.5 | 2.0 | 2.0 | 2.0 | 2.0 | 0.3 |
| Content of specific water-soluble organic compound/content of specific graft polymer | 2.0 | 2.0 | 2.0 | 8.0 | 0.8 | 2.0 | 2.0 | 2.0 | 2.0 | 0.0 | 8.0 | 4.0 | 10.0 | 20.0 | 40.0 | 2.0 |

**Table 2-3: Composition of ink**

| | Example | | | | | | | | Comparative Example | | | | | |
|---|---|---|---|---|---|---|---|---|---|---|---|---|---|---|
| | 33 | 34 | 35 | 36 | 37 | 38 | 39 | 40 | 1 | 2 | 3 | 4 | 5 | 6 |
| Pigment dispersion liquid 1 | | | 40.0 | 40.0 | 40.0 | 40.0 | 40.0 | 40.0 | 40.0 | 40.0 | 40.0 | 40.0 | | |
| Pigment dispersion liquid 2 | 40.0 | | | | | | | | | | | | 40.0 | |
| Pigment dispersion liquid 3 | | 40.0 | | | | | | | | | | | | 40.0 |
| Graft polymer 1 | | | | | | | | | | | | | | |
| Graft polymer 2 | 2.0 | 2.0 | 0.4 | 10.0 | 2.0 | 2.0 | 0.5 | 3.0 | | | | | | |
| Graft polymer 3 | | | | | | | | | | | | | | |
| Graft polymer 4 | | | | | | | | | | | | | | |
| Graft polymer 5 | | | | | | | | | | | | | | |
| Graft polymer 6 | | | | | | | | | | | | | | |
| Graft polymer 7 | | | | | | | | | | | | | | |
| Graft polymer 8 | | | | | | | | | | | | | | |
| Graft polymer 9 | | | | | | | | | | | | | | |
| Graft polymer 10 | | | | | | | | | | | | | | |
| Graft polymer 11 | | | | | | | | | | | | | | |
| Graft polymer 12 | | | | | | | | | | | | | | |
| Graft polymer 13 | | | | | | | | | | | | | | |
| Graft polymer 14 | | | | | | | | | | | | | | |
| Graft polymer 15 | | | | | | | | | | | | | | |
| Graft polymer 16 | | | | | | | | | | | | | | |
| Graft polymer 17 | | | | | | | | | | | | | | |
| Graft polymer 18 | | | | | | | | | | | | | | |
| Graft polymer 19 | | | | | | | | | | | | | | |
| Graft polymer 20 | | | | | | | | | 2.0 | | | | 2.0 | 2.0 |
| Graft polymer 21 | | | | | | | | | | 2.0 | | | | |
| Graft polymer 22 | | | | | | | | | | | 2.0 | | | |
| Graft polymer 23 | | | | | | | | | | | | 2.0 | | |
| Glycerin | 15.0 | 15.0 | 15.0 | 15.0 | 15.0 | 15.0 | 15.0 | 15.0 | 15.0 | 15.0 | 15.0 | 15.0 | 15.0 | 15.0 |
| Polyethylene glycol (*1) | 5.0 | 5.0 | 5.0 | 5.0 | 5.0 | 5.0 | 5.0 | 5.0 | 5.0 | 5.0 | 5.0 | 5.0 | 5.0 | 5.0 |
| Acetylenol E100 (*2) | 1.0 | 1.0 | 1.0 | 1.0 | 1.0 | 1.0 | 1.0 | 1.0 | 1.0 | 1.0 | 1.0 | 1.0 | 1.0 | 1.0 |
| Ethylene urea | | | | | | | | | | | | | | |
| 2-pyrrolidone | 2.0 | 2.0 | 2.0 | 2.0 | 1.5 | 8.0 | 1.0 | 11.0 | 2.0 | 2.0 | 2.0 | 2.0 | 2.0 | 2.0 |
| N-methyl-2-pyrrolidone | | | | | | | | | | | | | | |
| 1,2-hexanediol | 2.0 | 2.0 | 2.0 | 2.0 | 1.5 | 8.0 | 0.5 | 11.0 | 2.0 | 2.0 | 2.0 | 2.0 | 2.0 | 2.0 |
| Pure water | 33.0 | 33.0 | 34.6 | 25.0 | 34.0 | 21.0 | 37.0 | 14.0 | 33.0 | 33.0 | 33.0 | 33.0 | 33.0 | 33.0 |
| Graft Polymer No. | 2 | 2 | 2 | 2 | 2 | 2 | 2 | 2 | 12 | 13 | 14 | 15 | 12 | 12 |
| Weight-average molecular weight | 15,800 | 15,800 | 15,800 | 15,800 | 15,800 | 15,800 | 15,800 | 15,800 | 15,300 | 15,200 | 15,400 | 15,500 | 15,300 | 15,300 |
| Acid value [mgKOH/g] | 99 | 99 | 99 | 99 | 99 | 99 | 99 | 99 | 104 | 104 | 97 | 101 | 104 | 104 |
| Proportion of unit having polysiloxane structure [%] | 20.0 | 20.0 | 20.0 | 20.0 | 20.0 | 20.0 | 20.0 | 20.0 | 20.0 | 20.0 | 20.0 | 0.0 | 20.0 | 20.0 |
| Proportion of nonionic unit [%] | 29.0 | 29.0 | 29.0 | 29.0 | 29.0 | 29.0 | 29.0 | 29.0 | 30.0 | 29.0 | 0.0 | 32.0 | 30.0 | 30.0 |
| Content of pigment [%] | 1.0 | 1.0 | 1.0 | 1.0 | 1.0 | 1.0 | 1.0 | 1.0 | 1.0 | 1.0 | 1.0 | 1.0 | 1.0 | 1.0 |
| Content of specific graft polymer [%] | 2.0 | 2.0 | 0.4 | 10.0 | 2.0 | 2.0 | 0.5 | 3.0 | 0.0 | 0.0 | 0.0 | 0.0 | 0.0 | 0.0 |
| Content of specific water-soluble organic compound [%] | 4.0 | 4.0 | 4.0 | 4.0 | 3.0 | 16.0 | 1.5 | 22.0 | 4.0 | 4.0 | 4.0 | 4.0 | 4.0 | 4.0 |
| Content of pigment/content of specific graft polymer | 0.5 | 0.5 | 2.5 | 0.1 | 0.5 | 0.5 | 2.0 | 0.3 | - | - | - | - | - | - |
| Content of specific water-soluble organic compound/content of specific graft polymer | 2.0 | 2.0 | 10.0 | 0.4 | 1.5 | 8.0 | 3.0 | 7.3 | - | - | - | - | - | - |

### Evaluation

### Evaluation for scratch resistance

The respective inks obtained in the foregoing were charged into ink cartridges of an ink jet recording apparatus (trade name: BJF 900; manufactured by Canon Inc.), and each of the ink cartridges was set at the cyan ink position of the above ink jet recording apparatus. Next, images each having a recording duty of 100% were recorded on a Mitsubishi Photo Gloss Paper (manufactured by Mitsubishi) with such an ink jet recording apparatus at an ejection amount of 4.5 ng and a resolution of 1,200 dpi×1,200 dpi by eight-path, reciprocating recording. After each of the resultant recorded articles was left to stand at room temperature for one day, the image of each recorded article was scratched with a nail under such a strong pressure that the non-recorded portion of the recording medium was damaged. After that, each recorded article was evaluated for its scratch resistance by visual observation. The criteria of the evaluation for scratch resistance are as described below. Table 3 shows the results of the evaluation. In the present invention, the levels equal to or above C in the following evaluation criteria were each defined as an acceptable scratch resistance level.
AAA: No nail mark remained in the surface of the image.
AA: Nearly no nail mark remained in the surface of the image.
A: A slight nail mark remained in the surface of the image, but no coloring material was shaved off from the recording medium.
B: A nail mark remained in the surface of the image, but no coloring material was shaved off from the recording medium.
C: A nail mark remained in the surface of the image, and the coloring material was slightly shaved off from the recording medium.
D: The surface of the recording medium was not exposed, but the coloring material was evidently shaved off.
E: The scratch resistance was at such a level that no problem arose when the image was lightly touched, but, when the image was scratched under such a pressure that the recording medium was seriously damaged, the coloring material was shaved off to such an extent that the surface of the recording medium was observed.

### Evaluation for glossiness

Evaluation for glossiness was performed by measuring glossiness (20° gloss value) in the image region of each of the recorded articles obtained in the foregoing with a microhaze meter (manufactured by BYK-Gartner). The criteria of the evaluation for glossiness are as described below. Table 3 shows the results of the evaluation. In the present invention, the levels equal to or above A in the following evaluation criteria were each defined as an acceptable glossiness level.
AA: The 20° gloss value was 40 or more.
A: The 20° gloss value was 35 or more and less than 40.
B: The 20° gloss value was 30 or more and less than 35.
C: The 20° gloss value was less than 30.

### Evaluation for ejection stability

Each of the inks obtained in the foregoing was charged into an ink cartridge for an ink jet recording apparatus (trade name: PIXUS 850i; manufactured by Canon Inc.), and the ink cartridge was set at the cyan ink position of a modified apparatus of the above ink jet recording apparatus. Images each having a recording duty of 50% and each measuring 18 cm by 24 cm were recorded on three sheets of an Office Planner (manufactured by Canon Inc.) according to a default mode. At that time, the surface of a recording head was cleaned with a wiper blade of the PIXUS 850i once every time recording was performed on one sheet. After that, the nozzle check pattern of the PIXUS 850i was recorded. Evaluation for ejection stability was performed by visually observing the nozzle check pattern obtained in the foregoing. The criteria of the evaluation for ejection stability are as described below. Table 3 shows the results. In the present invention, the levels equal to or above B in the following evaluation criteria were each defined as an acceptable ejection stability level, and the level A was defined as an excellent ejection stability level.
A: No disturbance was observed in the nozzle check pattern, so normal recording was attained.
B: Slight disturbance was observed in the nozzle check pattern, but the pattern was free of any portion where no ink was ejected.
C: The nozzle check pattern clearly had a portion where no ink was ejected and disturbance, so normal recording was not attained.

**Table 3: Results of evaluation**

| | | Scratch resistance | Glossiness | Ejection stability |
|---|---|---|---|---|
| | 1 | AA | AA | AA |
| | 2 | AA | AA | AA |
| | 3 | AA | AA | B |
| | 4 | A | A | AA |
| | 5 | A | A | AA |
| | 6 | AAA | A | AA |
| | 7 | AA | AA | A |
| | 8 | A | AA | AA |
| | 9 | AAA | A | A |
| | 10 | AA | AA | A |
| | 11 | C | AA | A |
| | 12 | C | A | AA |
| | 13 | C | A | B |
| | 14 | C | A | A |
| | 15 | C | A | AA |
| | 16 | A | A | AA |
| | 17 | C | AA | AA |
| | 18 | B | A | B |
| | 19 | C | A | B |
| | 20 | A | A | AA |
| Example | 21 | C | A | A |
| | 22 | A | A | AA |
| | 23 | A | A | AA |
| | 24 | A | A | AA |
| | 25 | A | A | AA |
| | 26 | C | A | A |
| | 27 | AA | AA | A |
| | 28 | B | A | A |
| | 29 | AA | A | A |
| | 30 | B | A | B |
| | 31 | C | A | B |
| | 32 | A | A | AA |
| | 33 | A | A | AA |
| | 34 | A | A | AA |
| | 35 | C | A | AA |
| | 36 | C | A | A |
| | 37 | B | A | AA |
| | 38 | A | A | AA |
| | 39 | C | A | AA |
| | 40 | A | A | B |
| Comparative Example | 1 | D | A | AA |
| | 2 | D | A | AA |
| | 3 | A | C | A |
| | 4 | E | A | AA |
| | 5 | D | B | AA |
| | 6 | D | B | AA |

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An ink jet ink comprising at least a pigment, a graft polymer and water,
wherein the graft polymer includes at least a nonionic unit represented by the following general formula (I) and a unit having a polysiloxane structure: 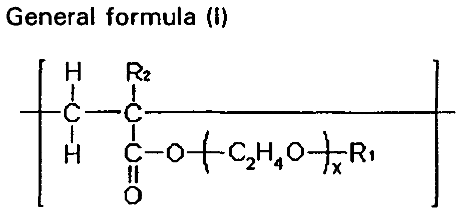 where R₁ and R₂ each independently represent a hydrogen atom or a methyl group, and x represents 1 or 2; and
wherein the graft polymer further includes a unit having an acidic group and has an acid value of 80 mgKOH/g or more and 150 mgKOH/g or less.

2. An ink jet ink according to claim 1, wherein a proportion of the unit having a polysiloxane structure with reference to a total mass of the graft polymer is 10.0 mass% or more and 40.0 mass% or less.

3. An ink jet ink according to claim 1 or 2, wherein a proportion of the nonionic unit represented by the general formula (I) with reference to a total mass of the graft polymer is 5.0 mass% or more and 45.0 mass% or less.

4. An ink jet ink according to any one of claims 1 to 3, wherein a content (mass%) of the pigment in the ink is 0.2 or more and 2.0 or less times as large as a content (mass%) of the graft polymer in the ink in terms of mass ratio.

5. An ink jet ink according to any one of claims 1 to 4, further comprising a water-soluble organic compound that is at least one compound selected from the group consisting of compounds represented by the following general formulae (II), (III), and (IV): 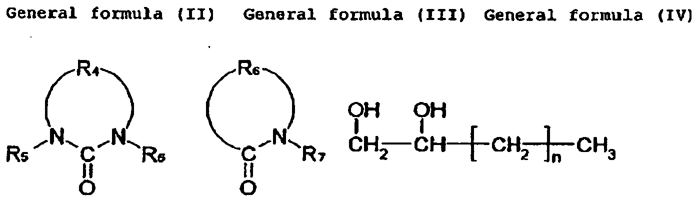 where R₄ represents an alkylene group which has 2 to 5 carbon atoms and which may have a substituent, R₅'s each independently represent a hydrogen atom or an alkyl group which has 1 to 4 carbon atoms and which may have a substituent, R₆ represents an alkylene group which has 2 to 5 carbon atoms and which may have a substituent, R₇ represents a hydrogen atom or an alkyl group which has 1 to 4 carbon atoms and which may have a substituent, and n represents a number of 1 to 3.

6. An ink jet ink according to any one of claims 1 to 5, wherein a total content (mass%) of the compounds represented by the general formulae (II), (III), and (IV) in the ink is 2.0 times or more as large as the content (mass%) of the graft polymer in the ink in terms of mass ratio.

7. An ink jet ink according to any one of claims 1 to 6, wherein a total content (mass%) of the compounds represented by the general formulae (II), (III), and (IV) in the ink is 2.0 mass% or more with reference to a total mass of the ink.

8. An ink jet recording method comprising ejecting ink by an ink jet method to perform recording on a recording medium, wherein the ink jet ink according to any one of claims 1 to 7 is used as the ink.

9. An ink cartridge comprising an ink storage portion for storing ink, wherein the ink stored in the ink storage portion is the ink jet ink according to any one of claims 1 to 7.

10. A recording unit comprising an ink storage portion for storing ink and a recording head for ejecting the ink, wherein the ink stored in the ink storage portion is the ink jet ink according to any one of claims 1 to 7.

11. An ink jet recording apparatus comprising an ink storage portion for storing ink and a recording head for ejecting the ink,
wherein the ink stored in the ink storage portion is the ink jet ink according to any one of claims 1 to 7.

## Patentansprüche

1. Tintenstrahltinte, umfassend zumindest ein Pigment, ein Pfropfpolymer und Wasser,
wobei das Pfropfpolymer zumindest eine nichtionische Einheit, dargestellt durch die nachstehende allgemeine Formel (I), und eine eine Polysiloxanstruktur aufweisende Einheit enthält: 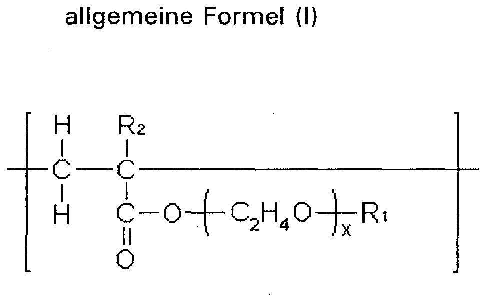 wobei R₁ und R₂ jeweils unabhängig ein Wasserstoffatom oder eine Methylgruppe darstellen, und x 1 oder 2 darstelft; und
wobei das Pfropfpolymer weiter eine Einheit enthält, die eine Säuregruppe aufweist, und eine Säurezahl von 80 mgKOH/g oder mehr und 150 mgKOH/g oder weniger aufweist.

2. Tintenstrahltinte nach Anspruch 1 , wobei ein Verhältnis der eine Polysiloxanstruktur aufweisenden Einheit in Bezug auf ein Gesamtgewicht des Pfropfpolymers 10,0 Gewichtsprozent oder mehr und 40,0 Gewichtsprozent oder weniger beträgt.

3. Tintenstrahltinte nach Anspruch 1 oder 2, wobei ein Verhältnis der durch die allgemeine Formel (I) dargestellten, nichtionischen Einheit in Bezug auf ein Gesamtgewicht des Pfropfpolymers 5,0 Gewichtsprozent oder mehr und 45,0 Gewichtsprozent oder weniger beträgt.

4. Tintenstrahltinte nach einem der Ansprüche 1 bis 3, wobei ein Gehalt (Gewichtsprozent) des Pigments in der Tinte hinsichtlich eines Massenverhältnisses 0,2 oder mehr und 2,0 oder weniger mal so groß ist wie ein Gehalt (Gewichtsprozent) des Pfropfpolymers in der Tinte.

5. Tintenstrahltinte nach einem der Ansprüche 1 bis 4, weiter umfassend eine wasserlösliche organische Verbindung, die zumindest eine Verbindung ist aus der Gruppe aus Verbindungen, die durch die nachstehenden allgemeinen Formeln (II), (III) und (IV) dargestellt sind: 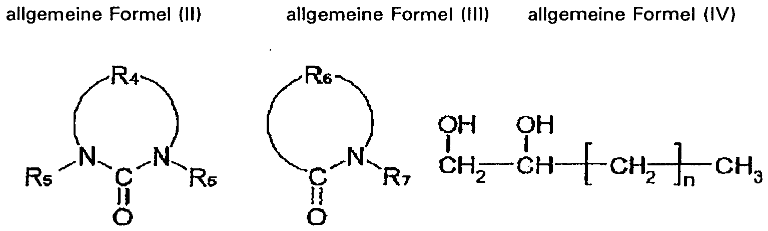 wobei R₄ eine Alkylengruppe darstellt, die 2 bis 5 Kohlenstoffatome aufweist und einen Substituenten aufweisen kann, jedes R₅ jeweils unabhängig ein Wasserstoffatom oder eine Alkylgruppe darstellt, die 1 bis 4 Kohlenstoffatome aufweist und einen Substituenten aufweisen kann, R₆ eine Alkylengruppe darstellt, die 2 bis 5 Kohlenstoffatome aufweist und einen Substituenten aufweisen kann, R₇ ein Wasserstoffatom oder eine Alkylgruppe darstellt, die 1 bis 4 Kohlenstoffatome aufweist und einen Substituenten aufweisen kann, und n eine Zahl von 1 bis 3 darstellt.

6. Tintenstrahltinte nach einem der Ansprüche 1 bis 5, wobei ein Gesamtgehalt (Gewichtsprozent) der durch die allgemeinen Formeln (II), (III) und (IV) dargestellten Verbindungen in der Tinte hinsichtlich eines Massenverhältnisses 2,0 mal oder mehr so groß ist wie der Gehalt (Gewichtsprozent) des Pfropfpolymers in der Tinte.

7. Tintenstrahltinte nach einem der Ansprüche 1 bis 6, wobei ein Gesamtgehalt (Gewichtsprozent) der durch die allgemeinen Formeln (II), (III) und (IV) dargestellten Verbindungen in der Tinte 2,0 Gewichtsprozent oder mehr in Bezug auf ein Gesamtgewicht der Tinte beträgt.

8. Tintenstrahlaufzeichnungsverfahren, umfassend: Ausstoßen von Tinte durch ein Tintenstrahlverfahren zum Durchführen von Aufzeichnen auf einem Aufzeichnungsmedium, wobei die Tintenstrahltinte nach einem der Ansprüche 1 bis 7 als die Tinte verwendet wird.

9. Tintenpatrone, umfassend einen Tintenspeicherabschnitt zum Speichern von Tinte, wobei die im Tintenspeicherabschnitt gespeicherte Tinte die Tintenstrahltinte nach einem der Ansprüche 1 bis 7 ist.

10. Aufzeichnungseinrichtung, umfassend einen Tintenspeicherabschnitt zum Speichern von Tinte und einen Aufzeichnungskopf zum Ausstoßen der Tinte, wobei die im Tintenspeicherabschnitt gespeicherte Tinte die Tintenstrahltinte nach einem der Ansprüche 1 bis 7 ist.

11. Tintenstrahlaufzeichnungsvorrichtung, umfassend einen Tintenspeicherabschnitt zum Speichern von Tinte und einen Aufzeichnungskopf zum Ausstoßen der Tinte,
wobei die im Tintenspeicherabschnitt gespeicherte Tinte die Tintenstrahltinte nach einem der Ansprüche 1 bis 7 ist.

## Revendications

1. Encre pour jet d'encre, comprenant au moins un pigment, un polymère greffé et de l'eau,
dans laquelle le polymère greffé comprend au moins un motif non ionique représenté par la formule générale (I) suivante et un motif ayant une structure polysiloxane : 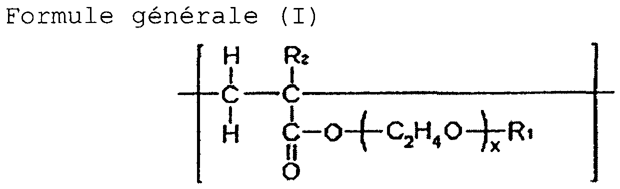 dans laquelle R₁ et R₂ représentent chacun indépendamment un atome d'hydrogène ou un groupe méthyle, et x est égal à 1 ou 2 ; et
dans laquelle le polymère greffé comprend en outre un motif ayant un groupe acide et a un indice d'acide de 80 mg de KOH/g ou plus à 150 mg de KOH/g ou moins.

2. Encre pour jet d'encre suivant la revendication 1, dans laquelle une proportion du motif ayant une structure polysiloxane par référence à la masse totale du polymère greffé va de 10,0 % en masse ou plus à 40,0 % en masse ou moins.

3. Encre pour jet d'encre suivant la revendication 1 ou 2, dans laquelle une proportion du motif non ionique représenté par la formule générale (I) par référence à la masse totale du polymère greffé va de 5,0 % en masse ou plus à 45,0 % en masse ou moins.

4. Encre pour jet d'encre suivant l'une quelconque des revendications 1 à 3, dans laquelle la quantité (% en masse) du pigment dans l'encre va de 0,2 fois ou plus à 2 fois ou moins la quantité (% en masse) du polymère greffé dans l'encre en termes de rapport en masse.

5. Encre pour jet d'encre suivant l'une quelconque des revendications 1 à 4, comprenant en outre un composé organique hydrosoluble qui est au moins un composé choisi dans le groupe consistant en les composés représentés par les formules générales (II), (III) et (IV) suivantes : 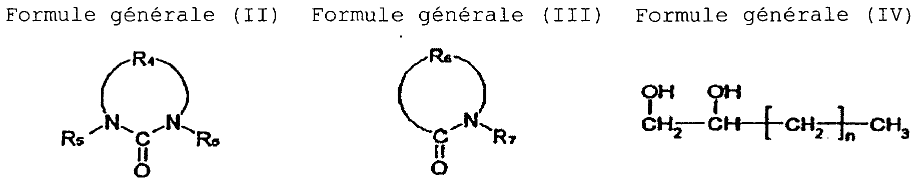 dans lesquelles R₄ représente un groupe alkylène qui a 2 à 5 atomes de carbone et qui peut porter un substituant, les groupes R₅ représentent chacun indépendamment un atome d'hydrogène ou un groupe alkyle qui a 1 à 4 atomes de carbone et qui peut porter un substituant, R₆ représente un groupe alkylène qui a 2 à 5 atomes de carbone et qui peut porter un substituant, R₇ représente un atome d'hydrogène ou un groupe alkyle qui a 1 à 4 atomes de carbone et qui peut porter un substituant, et n représente un nombre de 1 à 3.

6. Encre pour jet d'encre suivant l'une quelconque des revendications 1 à 5, dans laquelle la quantité totale (% en masse) des composés représentés par les formules générales (II), (III) et (IV) dans l'encre représente 2,0 ou plus de 2,0 fois la quantité (% en masse) du polymère greffé dans l'encre en termes de rapport en masse.

7. Encre pour jet d'encre suivant l'une quelconque des revendications 1 à 6, dans laquelle la quantité totale (% en masse) des composés représentés par les formules générales (II), (III) et (IV) dans l'encre représente 2,0 ou plus de 2,0 % en masse de la masse totale de l'encre.

8. Procédé d'enregistrement par jet d'encre, comprenant l'éjection d'une encre par un procédé à jet d'encre pour effectuer un enregistrement sur un support d'enregistrement, dans lequel l'encre pour jet d'encre suivant l'une quelconque des revendications 1 à 7 est utilisée comme encre.

9. Cartouche d'encre comprenant une portion de stockage d'encre pour stocker une encre, dans laquelle l'encre stockée dans la portion de stockage d'encre est l'encre pour jet d'encre suivant l'une quelconque des revendications 1 à 7.

10. Unité d'enregistrement comprenant une portion de stockage d'encre pour stocker une encre et une tête d'enregistrement pour éjecter l'encre, dans laquelle l'encre stockée dans la portion de stockage d'encre est l'encre pour jet d'encre suivant l'une quelconque des revendications 1 à 7.

11. Appareil d'enregistrement par jet d'encre comprenant une portion de stockage d'encre pour stocker une encre et une tête d'enregistrement pour éjecter l'encre,
dans lequel l'encre stockée dans la portion de stockage d'encre est l'encre pour jet d'encre suivant l'une quelconque des revendications 1 à 7.
